# EUROPEAN PATENT APPLICATION

(11) **EP 4 654 567 A1**
(43) Date of publication of application: **26.11.2025**
(21) Application number: 24829913.3
(22) Date of filing: 29.02.2024
(51) Int. Cl.: H04M 1/72454

(54) **WALLPAPER DISPLAY METHOD AND ELECTRONIC DEVICE**

(30) Priority: 30.06.2023 CN 202310804802
(71) Applicant: Honor Device Co., Ltd., Shenzhen, Guangdong 518040 (CN)
(72) Inventor: LIU, Chao, Shenzhen, Guangdong 518040 (CN); GUO, Zhihao, Shenzhen, Guangdong 518040 (CN)
(74) Representative: Goddar, Heinz J.
(86) International application number: PCT/CN2024/079455
(87) International publication number: WO 2025/001257

(57) **Abstract**

This application provides a wallpaper display method and an electronic device, and relates to the field of terminal technologies. The electronic device is a foldable-screen device, and the foldable-screen device in an unfolded state displays a first interface. The first interface displays content in a display area of a first wallpaper in an unfolded state, for example, complete content of the first wallpaper. The first wallpaper has a corresponding offset, and the offset is used to determine an offset value of a display area of the first wallpaper in a folded state relative to a display area of the first wallpaper in the unfolded state. In other words, the first wallpaper is used to determine display content of the first wallpaper in the folded state. Then, during display of the first wallpaper, a user folds the foldable-screen device, and the foldable-screen device switches to a folded state. The foldable-screen device may read the offset corresponding to the first wallpaper, so as to determine the display content of the first wallpaper by using the offset, and display partial content of the first wallpaper, thereby implementing adaptive display of a wallpaper in different device states, and ensuring visual experience of the user.

## Description

This application claims priority to Chinese Patent Application No. 202310804802.7, filed with the China National Intellectual Property Administration on June 30, 2023 and entitled "WALLPAPER DISPLAY METHOD AND ELECTRONIC DEVICE", which is incorporated herein by reference in its entirety.

### TECHNICAL FIELD

This application relates to the field of terminal technologies, and in particular, to a wallpaper display method and an electronic device.

### BACKGROUND

With gradual maturity of foldable screen technologies, more users use foldable-screen devices (such as foldable-screen mobile phones). In a process in which a user uses a foldable-screen mobile phone, the foldable-screen mobile phone often displays a wallpaper. For example, the foldable-screen mobile phone displays a home screen wallpaper or a lock screen wallpaper. Because the foldable-screen mobile phone has different device states (such as a folded state and an unfolded state), how the foldable-screen mobile phone displays a wallpaper becomes a problem that needs to be urgently resolved.

### SUMMARY

In view of this, this application provides a wallpaper display method and an electronic device, so as to implement wallpaper display of a foldable-screen device in different device states.

According to a first aspect, this application provides a wallpaper display method, applied to a foldable-screen device. The foldable-screen device in an unfolded state displays a first interface, the first interface displays a first wallpaper in full screen, the first wallpaper has a corresponding offset, the offset of the first wallpaper indicates an offset value of a display area of the first wallpaper in a folded state relative to a display area of the first wallpaper in an unfolded state, a size of the display area of the first wallpaper in the folded state is the same as a size of a screen-on area of a screen in the folded state, and a size of the display area of the first wallpaper in the unfolded state is the same as a size of the screen-on area of the screen in the unfolded state.

Then, the user folds the foldable-screen device, and in response to a folding operation on the foldable-screen device, a device state of the foldable-screen device may be switched from the unfolded state to the folded state. The foldable-screen device in the folded state obtains the offset of the first wallpaper, and displays a second interface based on the offset of the first wallpaper. The second interface displays partial content of the first wallpaper (or described as follows: The second interface displays a second wallpaper, and the second wallpaper is partial content of the first wallpaper). The partial content (that is, the second wallpaper) of the first wallpaper displayed in the second interface has an offset corresponding to the offset in a target direction relative to the first wallpaper displayed in the first interface. In other words, the partial content of the first wallpaper is determined based on the offset of the first wallpaper.

In this application, when the foldable-screen device is in the unfolded state, the foldable-screen device displays content of the display area of the first wallpaper in the unfolded state, and a size of the display area of the first wallpaper in the unfolded state is the same as the size of the screen-on area of the screen in the unfolded state. In other words, if the content in the display area of the first wallpaper in the unfolded state is complete content of the first wallpaper, the foldable-screen device displays the complete content of the first wallpaper when displaying the wallpaper. During the display of the wallpaper, when the foldable-screen device switches from the unfolded state to the folded state, the size of the screen-on area of the screen of the foldable-screen device becomes smaller. Therefore, the foldable-screen device may determine, based on the offset of the first wallpaper, that the partial content in the display area of the first wallpaper in the unfolded state is the content in the display area of the first wallpaper in the folded state, and that the size of the display area of the first wallpaper in the folded state is the same as the size of the screen-on area of the screen in the folded state, and then display the content in the display area of the first wallpaper in the folded state. To be specific, the foldable-screen device displays less content of the first wallpaper, so as to implement adaptive display of wallpaper sizes in different device states. In addition, when the unfolded state is switched to the folded state, the display content of the first wallpaper is directly reduced, and there is no need to switch display of the wallpaper, so as to implement smooth display of the wallpaper, avoid a problem of sudden picture change, and improve visual experience of the user, thereby improving user satisfaction.

In a possible design manner, after the partial content of the first wallpaper is displayed, if the user unfolds the foldable-screen device again during the display of the partial content of the first wallpaper, the device state of the foldable-screen device is switched from the folded state to the unfolded state, and the foldable-screen device displays the first wallpaper in full screen again. To be specific, the foldable-screen device displays the first wallpaper in full screen in a third interface. Based on this, adaptive display of the wallpaper is implemented, and there is no need to switch display of the wallpaper, so as to implement smooth display of the wallpaper.

In a possible design manner, the foregoing process of displaying the first wallpaper in full screen again may be as follows: The foldable-screen device displays remaining content of the first wallpaper until complete content of the first wallpaper is displayed, thereby implementing a dynamic display effect of the wallpaper. Alternatively, the foldable-screen device directly displays complete content of the first wallpaper, so as to implement fast and complete display of the first wallpaper.

In a possible design manner, the first wallpaper is a wallpaper corresponding to a target theme, and the content in the display area of the first wallpaper in the unfolded state is complete content of the first wallpaper. Before the first interface is displayed, the user may first set a wallpaper theme of the foldable-screen device to the target theme. Specifically, the process of setting the target theme may include: A second operation input by the user is received. In response to the second operation, the foldable-screen device may create a wallpaper window whose size is the size of the screen-on area of the screen in the folded state. The second operation is used to trigger to set a theme of the foldable-screen device to the target theme if the second operation is an operation of setting the target theme.

The foldable-screen device sets a size of a surface corresponding to the wallpaper window. The size of the surface is the size of the screen-on area of the screen in the unfolded state, that is, the size of the first wallpaper displayed in full screen. The foldable-screen device may draw complete content of the first wallpaper in the surface.

Correspondingly, the first interface/the third interface displays complete content of the first wallpaper in the surface, and the second interface displays the second wallpaper, which is partial content of the first wallpaper in the surface.

In this application, after setting the theme, the foldable-screen device may create a wallpaper window whose size is the same as the size of the screen-on area of the current screen, and set a size of a surface corresponding to the wallpaper window to the size of the screen-on area of the screen in the unfolded state. In other words, the size of the surface is unrelated to the size of the screen-on area of the current screen, and a complete first wallpaper is drawn on the surface. When the foldable screen needs to display the wallpaper, the first wallpaper on the surface is displayed based on the wallpaper window. When the size of the screen-on area of the current screen is the size in the unfolded state, the size of the wallpaper window is the same as the size of the surface, and displaying complete content on the surface means displaying the complete first wallpaper. When the size of the screen-on area of the current screen is the size in the folded state, the size of the wallpaper window is less than the size of the surface, and displaying partial content on the surface means displaying a part of the first wallpaper, so that a wallpaper matching the size of the screen-on area of the current screen is displayed, thereby ensuring aesthetics of wallpaper display. In addition, the size of the surface is the size of the screen-on area of the screen in the unfolded state, so that when the device state of the foldable-screen device is switched, the foldable-screen device does not need to set the surface again to obtain a surface whose size is the same as the size of the screen-on area of the current screen, thereby avoiding a problem that a wallpaper picture blinks because the surface needs to be set again when the device state of the foldable-screen device is switched.

In a possible design manner, when a wallpaper application of the foldable-screen device has a setting permission, the foldable-screen device sets the size of the surface by using the wallpaper application. Based on this, a limitation of a permission can prevent any application from setting the size of the surface, so as to prevent the size of the surface from being tampered with by some applications, thereby ensuring security of wallpaper setting, improving stability of wallpaper display, and preventing the size of the wallpaper displayed by the foldable-screen device from being constantly changed. For example, when the foldable-screen device is in the unfolded state, because the size of the surface is reduced, the size of the wallpaper displayed by the foldable-screen device does not match the size of the screen-on area of the current screen, thereby ensuring user experience.

In a possible design manner, whether the wallpaper application has the setting permission may be implemented by using the following two implementations.

In one implementation, whether the wallpaper application has the setting is determined by using the preset whitelist. The foldable-screen device determines whether an identifier of the wallpaper application exists in the preset whitelist. When the identifier of the wallpaper application exists in the preset whitelist, the wallpaper application has the setting permission, that is, has a permission to invoke a preset setting interface to set the size of the surface.

When the identifier of the wallpaper application does not exist in the preset whitelist, the wallpaper application does not have the setting permission, that is, does not have the permission to invoke the preset setting interface.

In the other implementation, whether the wallpaper application has the setting is determined by using all permissions of the application. The foldable-screen device obtains all permissions of the wallpaper application. When the setting permission exists in all the permissions, the wallpaper application has the setting permission, that is, has the permission to invoke the preset setting interface to set the size of the surface.

When the setting permission does not exist in all the permissions, the wallpaper application does not have the setting permission, that is, does not have the permission to invoke the preset setting interface.

In a possible design manner, the foldable-screen device may add the identifier of the wallpaper application to the preset whitelist by invoking a preset adding interface, so that the wallpaper application has the setting permission, so as to implement addition of a device permission.

In a possible design manner, the theme package corresponding to the target theme includes the offset of the first wallpaper (or described as an offset corresponding to the first wallpaper).

The foldable-screen device may write the offset of the first wallpaper in the theme package corresponding to the target theme into a preset database. Correspondingly, the foldable-screen device reads the offset of the first wallpaper from the preset database, so as to obtain the offset of the first wallpaper.

In a possible design manner, the foregoing process of writing the offset of the first wallpaper may include:

When no offset of a wallpaper exists in the preset database, the foldable-screen device may directly write the offset of the first wallpaper into the preset database. When an offset of a wallpaper exists in the preset database, the foldable-screen device may delete the offset of the wallpaper that already exists in the preset database, and then the foldable-screen device writes the offset of the first wallpaper into the preset database. Based on this, resource occupation caused by storing a wallpaper may be reduced, and the offset of the first wallpaper may be quickly read.

In a possible design manner, when the foldable-screen device is in a horizontal fold mode, the offset of the first wallpaper is an offset in an x direction, and correspondingly, the target direction is the x direction. When the foldable-screen device is in a vertical fold mode, the offset is an offset in a y direction, and correspondingly, the target direction is the y direction.

In a possible design manner, the foregoing process of determining the display area of the first wallpaper in the folded state may include:

The foldable-screen device determines a position of the display area of the first wallpaper in the folded state based on the offset and the size of the screen-on area of the screen in the folded state, so as to determine the display area of the first wallpaper in the folded state.

In a possible design manner, the first wallpaper has a corresponding offset mode. The offset mode indicates an offset position of the display area of the first wallpaper in the folded state relative to the display area of the first wallpaper in the unfolded state. When the foldable-screen device is in a horizontal fold mode, the offset mode includes one or more of a center mode, a left-align mode, and a right-align mode; or when the foldable-screen device is in a vertical fold mode, the offset mode includes one or more of a center mode, a top-align mode, and a bottom-align mode. The offset mode is similar to the foregoing processes of storing, reading, and applying an offset (for example, using the offset mode to display the wallpaper in the folded state).

According to a second aspect, this application provides an electronic device. The electronic device includes a display, a memory, and one or more processors. The display and the memory are coupled to the processor. The display is configured to display an image generated by the processor, and the display includes a foldable screen. The memory is configured to store computer program code, and the computer program code includes computer instructions. When the processor executes the computer instructions, the electronic device is enabled to perform the wallpaper display method according to any one of the design manners of the first aspect.

According to a third aspect, this application provides a computer-readable storage medium, including computer instructions. When the computer instructions are run on an electronic device, the electronic device is enabled to perform the wallpaper display method according to any one of the design manners of the first aspect.

According to a fourth aspect, this application provides a computer program product. When the computer program product runs on an electronic device, the electronic device is enabled to perform the wallpaper display method according to any one of the design manners of the first aspect.

It may be understood that, for beneficial effects that can be achieved by the electronic device described in the second aspect, the computer-readable storage medium described in the third aspect, and the computer program product described in the fourth aspect, reference may be made to the beneficial effects in the first aspect and any possible design manner of the first aspect. Details are not described herein.

### BRIEF DESCRIPTION OF DRAWINGS

FIG. 1A is a schematic diagram of an interface of an unfolded state of a foldable-screen device according to an embodiment of this application;
FIG. 1B is a schematic diagram of an interface of a folded state of a foldable-screen device according to an embodiment of this application;
FIG. 1C(1) to FIG. 1C(3) are a schematic diagram 1 of an outward folding process of a foldable-screen device according to an embodiment of this application;
FIG. 1D is a schematic diagram 1 of a foldable-screen device according to an embodiment of this application;
FIG. 1E is a schematic diagram 2 of a foldable-screen device according to an embodiment of this application;
FIG. 2A is a schematic diagram 1 of wallpaper display according to an embodiment of this application;
FIG. 2B is a schematic diagram 2 of wallpaper display according to an embodiment of this application;
FIG. 2C is a schematic diagram 3 of wallpaper display according to an embodiment of this application;
FIG. 3 is a schematic diagram of a hardware structure of an electronic device according to an embodiment of this application;
FIG. 4 is a schematic diagram of a structure of an electronic device according to an embodiment of this application;
FIG. 5A and FIG. 5B are schematic flowcharts 1 of a wallpaper display method according to an embodiment of this application;
FIG. 6A is a schematic diagram 1 of an interface of wallpaper setting according to an embodiment of this application;
FIG. 6B is a schematic diagram 2 of an interface of wallpaper setting according to an embodiment of this application;
FIG. 6C is a schematic diagram 3 of an interface of wallpaper setting according to an embodiment of this application;
FIG. 6D is a schematic diagram 4 of an interface of wallpaper setting according to an embodiment of this application;
FIG. 6E is a schematic diagram 5 of an interface of wallpaper setting according to an embodiment of this application;
FIG. 7A is a schematic diagram 1 of a display area of a wallpaper according to an embodiment of this application;
FIG. 7B is a schematic diagram 2 of a display area of a wallpaper according to an embodiment of this application;
FIG. 7C is a schematic diagram 1 of a wallpaper according to an embodiment of this application;
FIG. 7D is a schematic diagram 2 of a wallpaper according to an embodiment of this application;
FIG. 8A is a schematic diagram 1 of display content of a wallpaper according to an embodiment of this application;
FIG. 8B is a schematic diagram 2 of display content of a wallpaper according to an embodiment of this application;
FIG. 8C is a schematic diagram 3 of display content of a wallpaper according to an embodiment of this application;
FIG. 9 is a schematic flowchart 2 of a wallpaper display method according to an embodiment of this application;
FIG. 10A(1) and FIG. 10A(2) are a schematic diagram 4 of wallpaper display according to an embodiment of this application;
FIG. 10B is a schematic diagram 5 of wallpaper display according to an embodiment of this application;
FIG. 11A is a schematic diagram 6 of wallpaper display according to an embodiment of this application;
FIG. 11B is a schematic diagram 7 of wallpaper display according to an embodiment of this application;
FIG. 11C is a schematic diagram 8 of wallpaper display according to an embodiment of this application;
FIG. 12 is a schematic diagram 9 of wallpaper display according to an embodiment of this application; and
FIG. 13A to FIG. 13C are schematic flowcharts 3 of a wallpaper display method according to an embodiment of this application.

### DESCRIPTION OF EMBODIMENTS

In the following descriptions, the terms "first" and "second" are used merely for the purpose of description, and should not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

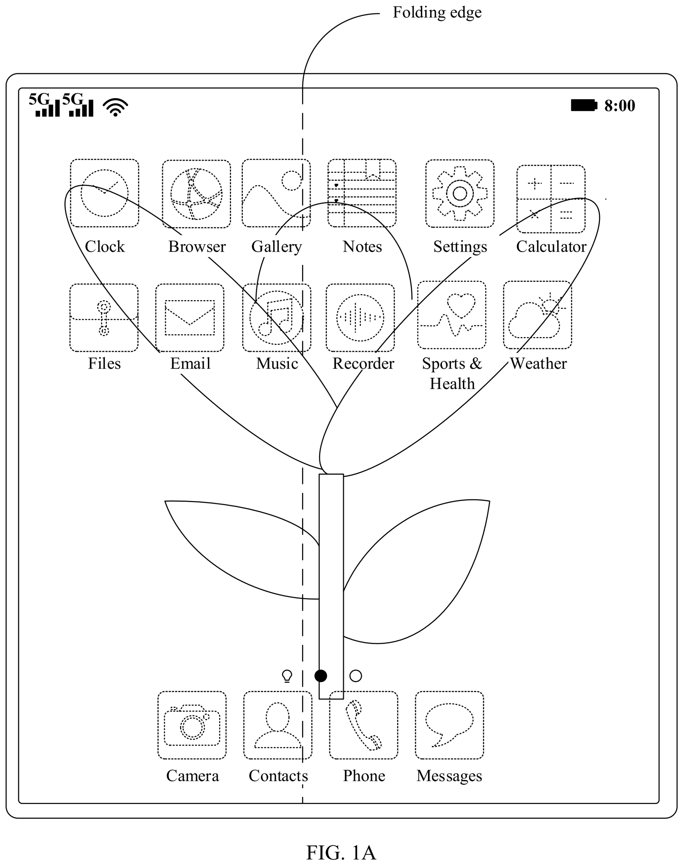

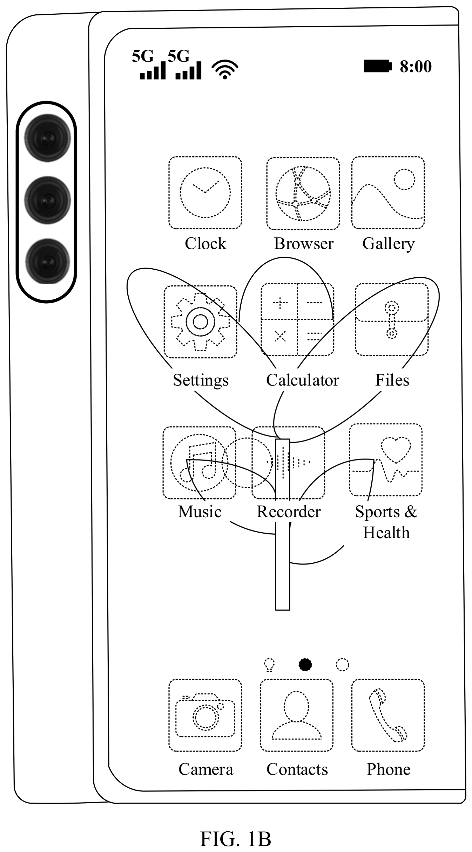

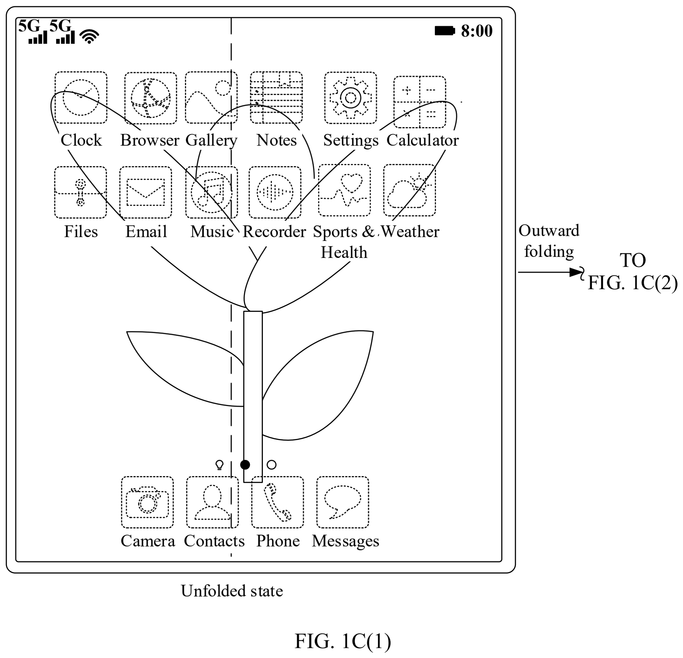

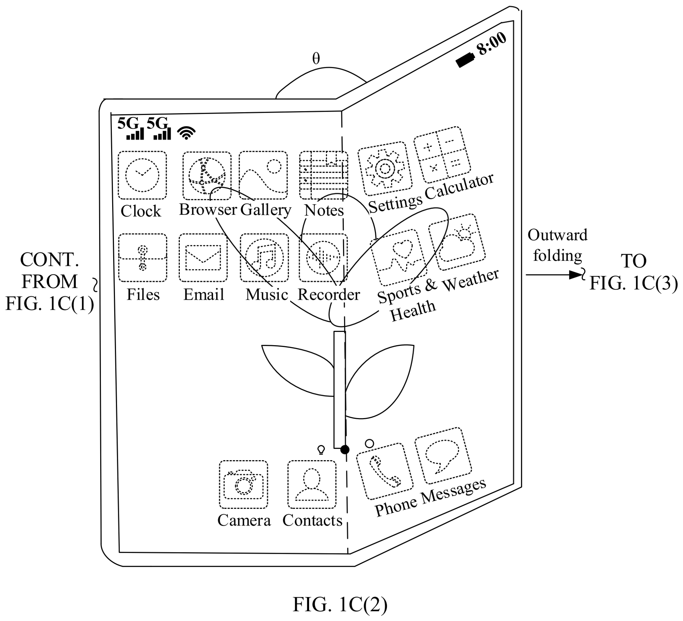

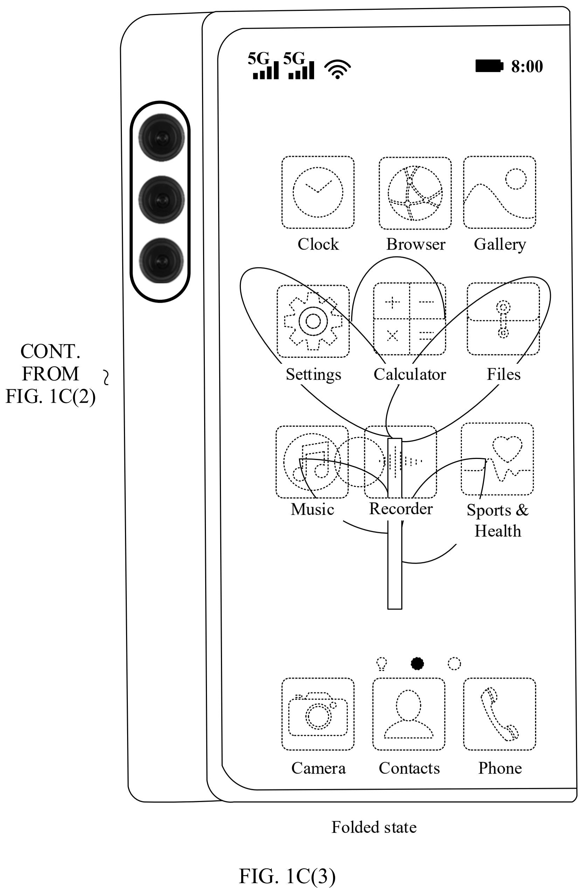

A screen of a foldable-screen device (foldable-screen mobile phone) is a whole screen, and may be folded or unfolded. Correspondingly, the foldable-screen device has two device states: a folded state and an unfolded state. When the screen is in the unfolded state (as shown in FIG. 1A), an entire area of the screen may be used to display data, for example, display a wallpaper. When the screen is in the folded state (as shown in FIG. 1B), a partial area of the screen is used to display data, and another partial area is always in a screen-off state, and is not used to display data. In other words, dimensions (or described as sizes) of the screen-on area of the screen of the foldable-screen mobile phone in different device states are different. When the foldable-screen mobile phone is in the unfolded state, the size of the screen-on area of the screen may be the size of the screen. Then, the foldable-screen mobile phone is folded (as shown in FIG. 1C(1) to FIG. 1C(3), the foldable-screen mobile phone is folded outward along a folding edge, that is, the foldable-screen mobile phone is folded toward a face opposite to a face that may display a user interface), to form the foldable-screen mobile phone in the folded state. When the foldable-screen mobile phone is in the folded state (as shown in FIG. 1B), the size of the screen-on area of the screen is a size of a partial screen.

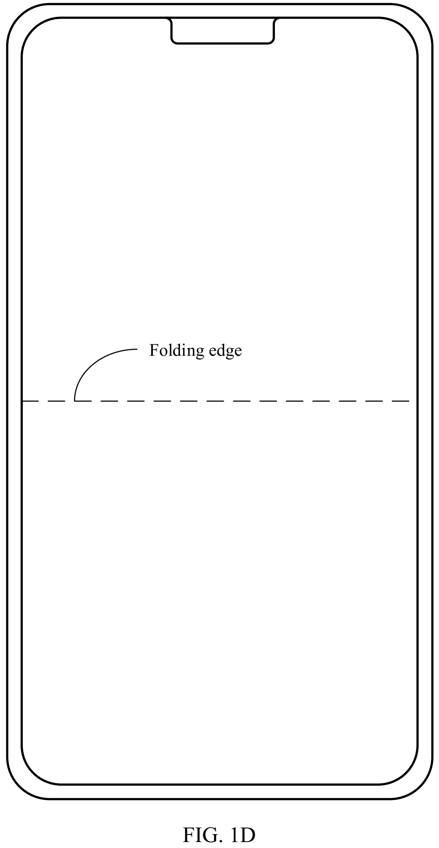

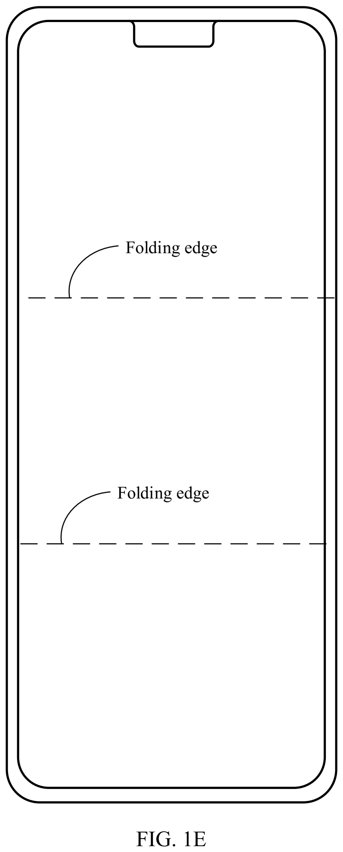

It should be noted that the folding manner of the foldable-screen mobile phone may be, for example, horizontal fold shown in FIG. 1C(1) to FIG. 1C(3), or may be vertical fold shown in FIG. 1D. The folding manner of the foldable-screen mobile phone is not limited in this embodiment of this application. In addition, a quantity of folding edges corresponding to the foldable-screen mobile phone may be one, as shown in FIG. 1A, FIG. 1C(1) to FIG. 1C(3), and FIG. 1D, or may be a value greater than 1, for example, two, as shown in FIG. 1E. The quantity of folding edges is not limited in this embodiment of this application.

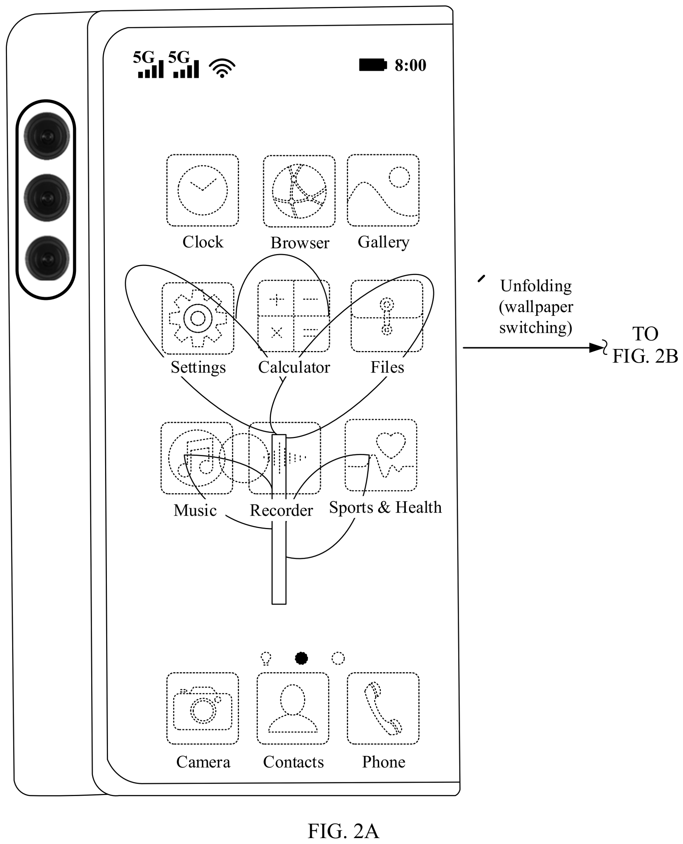

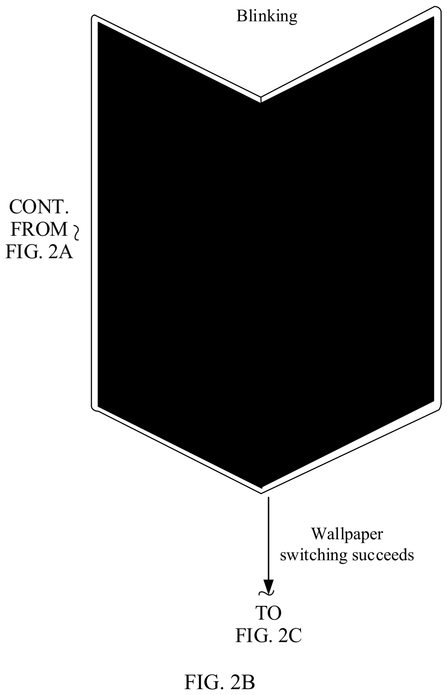

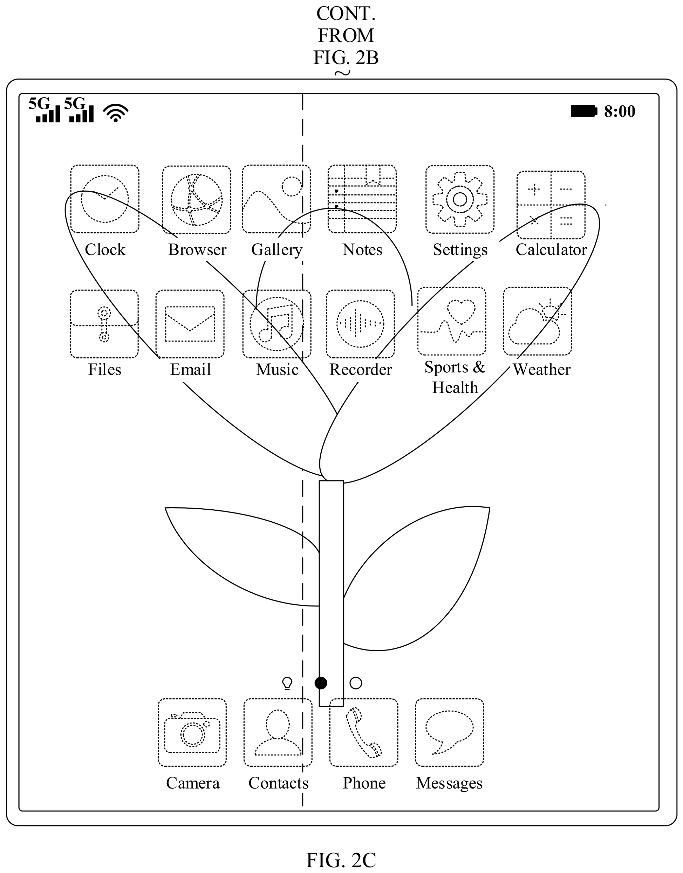

In some embodiments, after the foldable-screen mobile phone applies a theme, when displaying the home screen, the foldable-screen mobile phone displays a wallpaper corresponding to the theme. Because the sizes of the screen-on area of the screen of the foldable-screen mobile phone in different device states are different, the sizes of the wallpaper displayed on the foldable-screen mobile phone in different device states are different. When the foldable-screen mobile phone is in the folded state, the foldable-screen mobile phone may display a wallpaper whose size matches the size of the screen-on area of the screen in the folded state. When the foldable-screen mobile phone is in the unfolded state, the foldable-screen mobile phone displays a wallpaper whose wallpaper size matches the size of the screen-on area of the screen in the unfolded state. During display of the wallpaper on the foldable-screen mobile phone, the device state of the foldable-screen mobile phone may change. When the device state changes, the foldable-screen mobile phone needs to switch display of the wallpaper, so as to display a wallpaper whose size matches the size of the screen-on area of the screen in the changed device state. During the switching, the foldable-screen mobile phone may first blink a little bit before the switching can succeed, causing a sudden change of a displayed picture, and affecting visual experience of the user. For example, in a period during which the foldable-screen mobile phone displays the wallpaper shown in FIG. 2A, if the device state of the foldable-screen mobile phone is switched from the folded state to the unfolded state, the screen of the foldable-screen mobile phone blinks a little bit (as shown in FIG. 2B). Then, the foldable-screen mobile phone may display a wallpaper that is shown in FIG. 2C and that matches the size of the screen-on area of the screen in the unfolded state.

Therefore, to resolve the foregoing problems, this application provides a wallpaper display method. The wallpaper display method is mainly applied to a foldable-screen device whose folding manner is an outward folding manner (as shown in FIG. 1C(1) to FIG. 1C(3)). The foldable-screen device receives a return-to-home screen operation, indicating that the foldable-screen device needs to display a home screen wallpaper. The foldable-screen device may respond to the return-to-home screen operation. When the current device state is the unfolded state, the foldable-screen device may directly display a complete first wallpaper, that is, display a first interface on the screen. The first interface includes the complete first wallpaper. Then, the user folds the foldable-screen device, and the device state of the foldable-screen device is switched to the folded state. Because the size of the screen-on area of the screen in the folded state is less than the size of the screen-on area of the screen in the unfolded state, the foldable-screen device needs to adjust the size of the displayed first wallpaper. The foldable-screen device may obtain offset information of the first wallpaper. The offset information indicates an offset position of the display area of the first wallpaper in the folded state relative to the display area (that is, the complete area) of the first wallpaper in the unfolded state. The offset information may be used to determine a position of the display area of the first wallpaper in the folded state, that is, to determine display content of the first wallpaper in the folded state. Then, the foldable-screen device displays partial content of the first wallpaper based on the offset information, that is, reduces the display area of the first wallpaper, so that the display area of the first wallpaper matches the size of the screen area in the folded state. In this way, adaptive display of the wallpaper is implemented without switching the display, so as to implement smooth display of the wallpaper, avoid a problem of sudden picture change, and improve visual experience of the user, thereby improving user satisfaction.

It should be noted that, for the foldable-screen device, when the folding manner of the foldable-screen device is an inward folding manner, and when the foldable-screen device is in the unfolded state, the foldable-screen device displays the wallpaper by using an inner screen. When the foldable-screen device is in the folded state, the foldable-screen device displays the wallpaper by using an outer screen. The inner screen and the outer screen are opposite to each other, and are not on a same face. During display of the wallpaper, if the folded state is switched to the unfolded state, the screen that displays the wallpaper is switched from the outer screen to the inner screen, and switching of the screen inevitably causes a problem of sudden picture change. Therefore, the wallpaper display method provided in this application does not need to be applied. It should be understood that when the folding manner of the foldable-screen device is the inward folding manner, the foldable screen may be folded inward along a folding edge. To be specific, the foldable screen is folded toward a face that may display a user interface, to form the foldable-screen mobile phone in the folded state.

For example, the foldable-screen device in this embodiment of this application may be an electronic device with a foldable screen, such as a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), or an augmented reality (augmented reality, AR)\virtual reality (virtual reality, VR) device. A specific form of the electronic device is not specifically limited in this embodiment of this application.

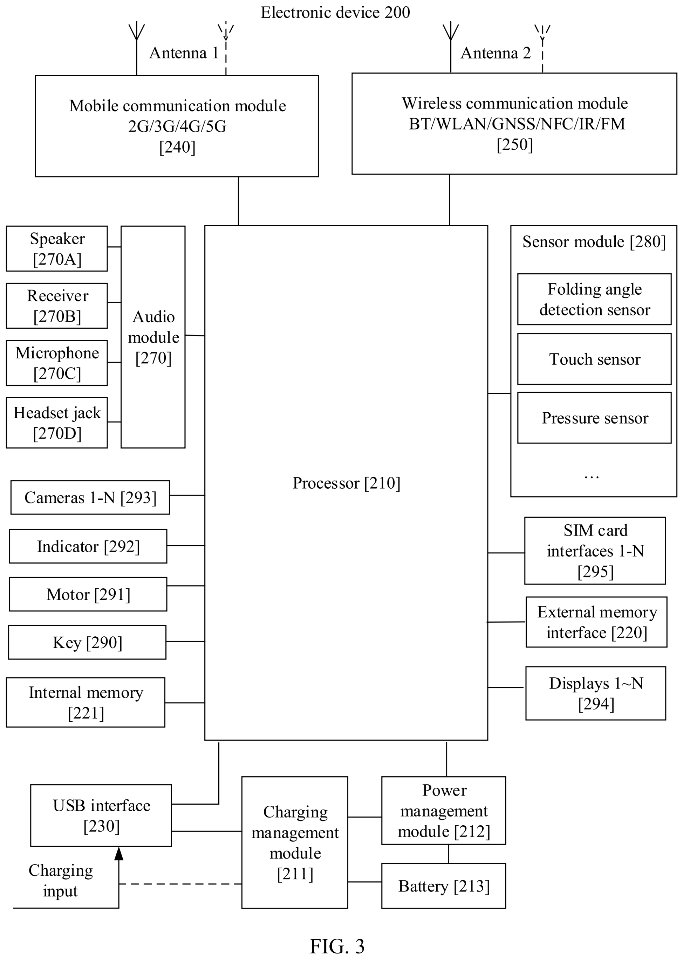

For example, FIG. 3 is a schematic diagram of a structure of an electronic device 200. As shown in FIG. 3, the electronic device 200 may include a processor 210, an external memory interface 220, an internal memory 221, a universal serial bus (universal serial bus, USB) interface 230, a charging management module 211, a power management module 212, a battery 213, an antenna 1, an antenna 2, a mobile communication module 240, a wireless communication module 250, an audio module 270, a speaker 270A, a receiver 270B, a microphone 270C, a headset jack 270D, a sensor module 280, a key 290, a motor 291, an indicator 292, a camera 293, a display 294, a subscriber identity module (subscriber identification module, SIM) card interface 295, and the like.

It may be understood that the structure shown in this embodiment of the present invention does not constitute a specific limitation on the electronic device 200. In some other embodiments of this application, the electronic device 200 may include more or fewer components than those shown in the figure, or may combine some components, or may split some components, or may have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 200. The controller may generate an operation control signal based on instruction operation code and a timing signal, to complete control of instruction fetching and instruction execution.

A memory may be further disposed in the processor 210 to store instructions and data. In some embodiments, the memory in the processor 210 is a cache memory. The memory may store instructions or data recently used or cyclically used by the processor 210. If the processor 210 needs to use the instructions or the data again, the processor may directly invoke the instructions or the data from the memory. This avoids repeated access and reduces a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and constitutes no limitation on the structure of the electronic device 200. In some other embodiments of this application, the electronic device 200 may alternatively use an interface connection manner different from that in the foregoing embodiment, or a combination of a plurality of interface connection manners.

The charging management module 211 is configured to receive a charging input from a charger. The charging management module 211 may further supply power to the electronic device by using the power management module 212 while charging the battery 213.

A wireless communication function of the electronic device 200 may be implemented by using the antenna 1, the antenna 2, the mobile communication module 240, the wireless communication module 250, the modem processor, the baseband processor, and the like.

The antenna 1 and the antenna 2 are configured to transmit and receive electromagnetic wave signals. Each antenna in the electronic device 200 may be configured to cover one or more communication bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 240 may provide a solution for wireless communication that is applied to the electronic device 200 and that includes 2G/3G/4G/5G and the like. The modem processor may include a modulator and a demodulator.

The wireless communication module 250 may provide a solution for wireless communication that is applied to the electronic device 200 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

The electronic device 200 implements a display function by using the GPU, the display 294, the application processor, and the like. The GPU is a microprocessor for image processing and connects the display 294 and the application processor. The GPU is configured to perform mathematical and geometric computing for graphics rendering. The processor 210 may include one or more GPUs that execute program instructions to generate or change display information.

The display (or referred to as screen) 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 200 may include one or N displays 294, where N is a positive integer greater than 1.

In some embodiments, the display 294 may be a foldable screen. The folding manner of the foldable screen may be the outward folding manner shown in FIG. 1C(1) to FIG. 1C(3).

For example, a value range of a folding angle (that is, an included angle between two parts of the screen folded along the folding edge) θ (for example, θ shown in FIG. 1C(1) to FIG. 1C(3)) of the foldable screen may be [0°, 180°]. When θ is in a range of [0°, X], it may be determined that the foldable-screen mobile phone is in the folded state. When θ is in a range of (X, 180°], it may be determined that the foldable-screen mobile phone is in the unfolded state. X is a first preset angle threshold. X may be set before the foldable-screen mobile phone is delivered from the factory, may be set by the user in the foldable-screen mobile phone, or may be determined by the foldable-screen mobile phone based on a use habit of the user. A value of X is not limited in this application. For example, X may be set to 85°, 90°, 95°, or the like. It is assumed that X is set to 90°. When the folding angle θ of the foldable screen is less than or equal to 90°, it is determined that the foldable-screen mobile phone is in the folded state. When the folding angle θ of the foldable screen is greater than 90°, it is determined that the foldable-screen mobile phone is in the unfolded state.

The electronic device 200 may implement a shooting function by using the ISP, the camera 293, the video codec, the GPU, the display 294, the application processor, and the like.

The external memory interface 220 may be configured to connect to an external memory card, for example, a Micro SD card, to extend a storage capability of the electronic device 200.

The internal memory 221 may be configured to store computer-executable program code. The executable program code includes instructions. The processor 210 performs various function applications and data processing of the electronic device 200 by running the instructions stored in the internal memory 221. The internal memory 221 may include a program storage area and a data storage area. The program storage area may store an operating system, an application required by at least one function (for example, a sound playing function or an image playing function), and the like. The data storage area may store data (for example, audio data and a phone book) created during use of the electronic device 200. In addition, the internal memory 221 may include a high-speed random access memory, and may further include a nonvolatile memory, for example, at least one magnetic disk storage device, a flash memory device, or a universal flash storage (universal flash storage, UFS).

The electronic device 200 may implement an audio function by using the audio module 270, the speaker 270A, the receiver 270B, the microphone 270C, the headset jack 270D, the application processor, and the like. For example, music playback or audio recording is implemented.

The key 290 includes a power-on/off key, a volume key, and the like. The indicator 292 may be an indicator light.

The sensor module 280 may include a folding angle detection sensor, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The folding angle detection sensor is configured to detect the folding angle of the electronic device 200, that is, the screen, for example, the folding angle θ shown in FIG. 1C(1) to FIG. 1C(3). For example, the folding angle detection sensor may be a Hall sensor.

A software system of the electronic device 200 may use a layered architecture, an event-driven architecture, a microkernel architecture, a microservice architecture, or a cloud architecture. In this embodiment of this application, an Android^{™} system with a layered architecture is used as an example to describe a software structure of the electronic device 200.

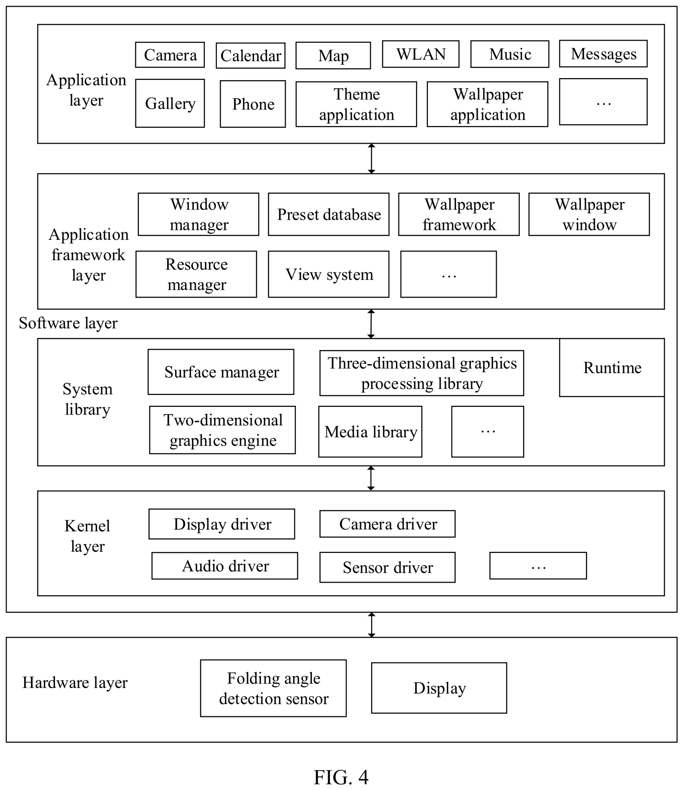

FIG. 4 is a block diagram of a structure of an electronic device 200 according to an embodiment of the present invention.

In a layered architecture, software is divided into several layers, and each layer has a clear role and task. The layers communicate with each other through software interfaces. In some embodiments, a software system is divided into four layers: an application layer, an application framework layer, a runtime (runtime) and system library, and a kernel layer from top to bottom.

The application layer may include a series of application packages.

As shown in FIG. 4, the application package may include applications such as camera, gallery, calendar, phone, map, theme application, WLAN, music, wallpaper application, messages, and the like.

The foregoing theme application may be used to set a wallpaper of the electronic device. The wallpaper application, which may also be referred to as wallpaper APK (AndroidPackage), may be used to load a wallpaper that needs to be displayed.

The application framework layer provides an application programming interface (application programming interface, API) and a programming framework for an application at the application layer. The application framework layer includes some predefined functions.

As shown in FIG. 4, the application framework layer may include a window manager, a preset database, a view system, a wallpaper framework, a resource manager, a wallpaper window, and the like.

The preset database may be used to store data, such as offset information of a wallpaper.

The wallpaper window may be used to display the wallpaper.

The wallpaper framework may be used to read and parse a theme package of the wallpaper, start the wallpaper application, and so on.

The runtime includes a kernel library and a virtual machine. The runtime is responsible for scheduling and managing the software system.

The kernel library includes two parts: One part is a functional function that needs to be invoked by a java language, and the other part is a kernel library.

The system library may include a plurality of functional modules, for example, a surface manager (surface manager), a media library (Media Libraries), a three-dimensional graphics processing library (for example, OpenGL ES), and a 2D graphics engine (for example, an SGL).

The kernel layer is a layer between hardware and software. The kernel layer includes at least a display driver, a camera driver, an audio driver, and a sensor driver.

In some embodiments, the software layer may communicate with the hardware layer. For example, the software layer may receive a folding angle or a device state sent by a folding angle detection sensor, so as to determine a size of a screen-on area of a current screen of the electronic device, a current device state, and the like. For another example, the software layer may send the to-be-displayed wallpaper content to the display, so as to display the wallpaper by using the display.

It may be understood that the layers in the structure shown in FIG. 4 and the components included in the layers do not constitute a specific limitation on the electronic device 200, that is, the foldable-screen device. In some other embodiments of this application, the structure may include more or fewer layers than those shown in the figure, and each layer may include more or fewer components. This is not limited in this application.

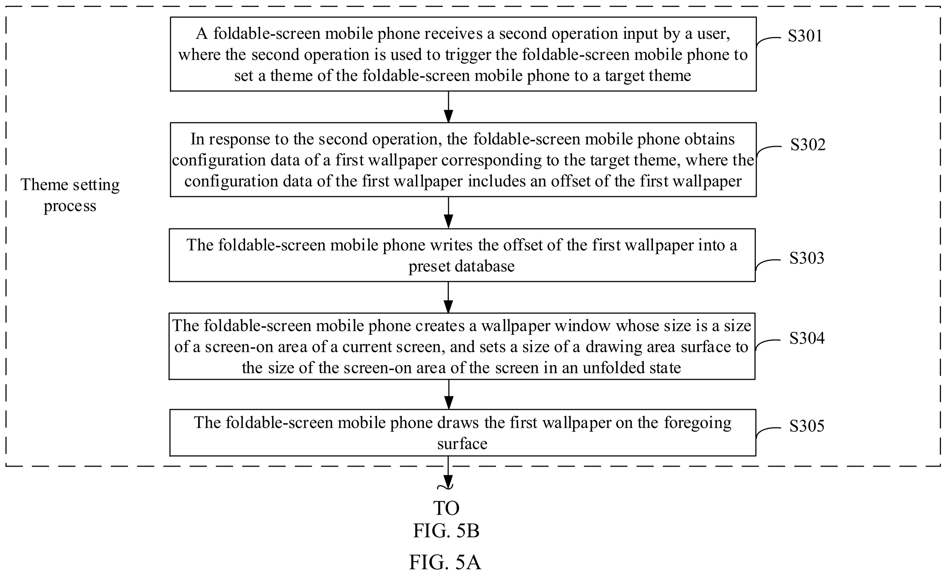

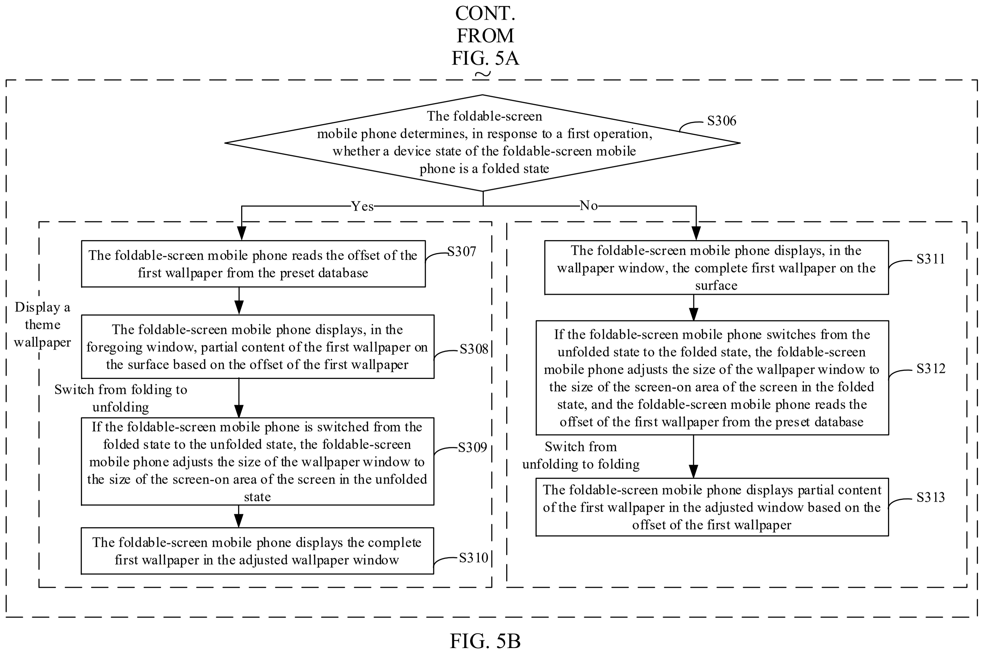

This application provides a wallpaper display method. In a process in which the user uses the foldable-screen device, the user may set a theme of the foldable-screen device. After the theme is set, the foldable-screen device may apply the theme to display a corresponding wallpaper. The wallpaper display method provided in this embodiment of this application is described below in detail with reference to the accompanying drawings and by using an example in which the electronic device (or the foldable-screen device) is a foldable-screen mobile phone, and the folding manner is the outward folding manner. As shown in FIG. 5A and FIG. 5B, the method may include steps S301-S313.

S301: The foldable-screen mobile phone receives a second operation input by the user. The second operation is used to trigger the foldable-screen mobile phone to set a theme of the foldable-screen mobile phone to a target theme.

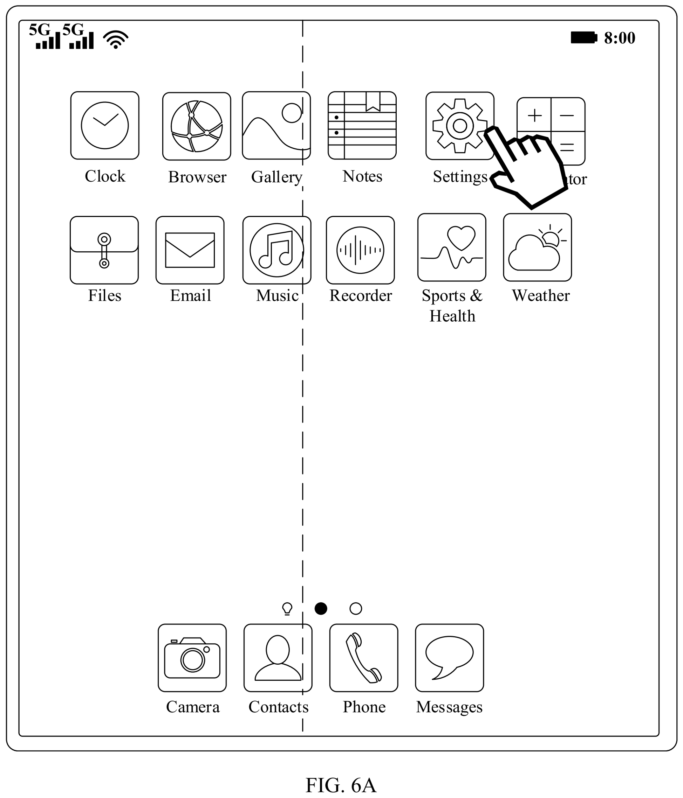

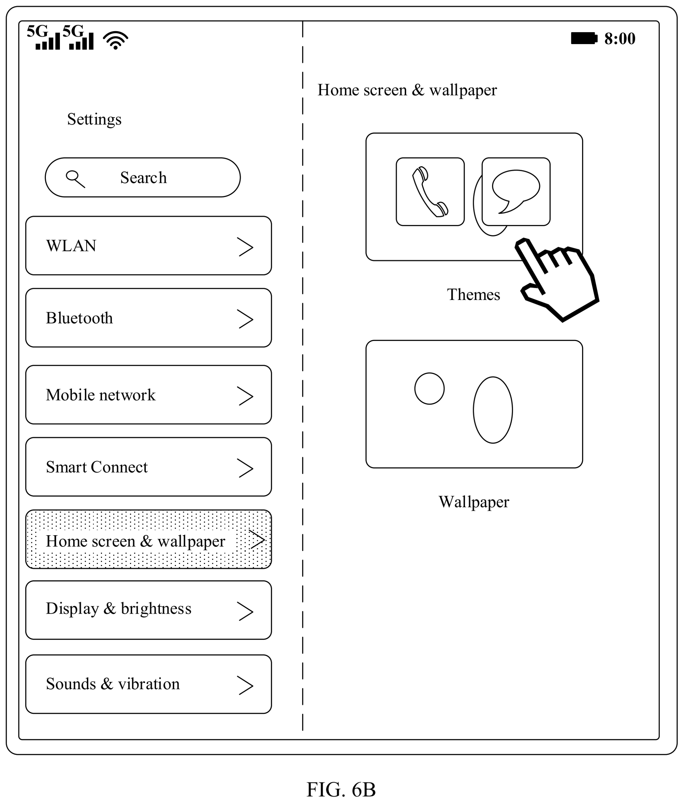

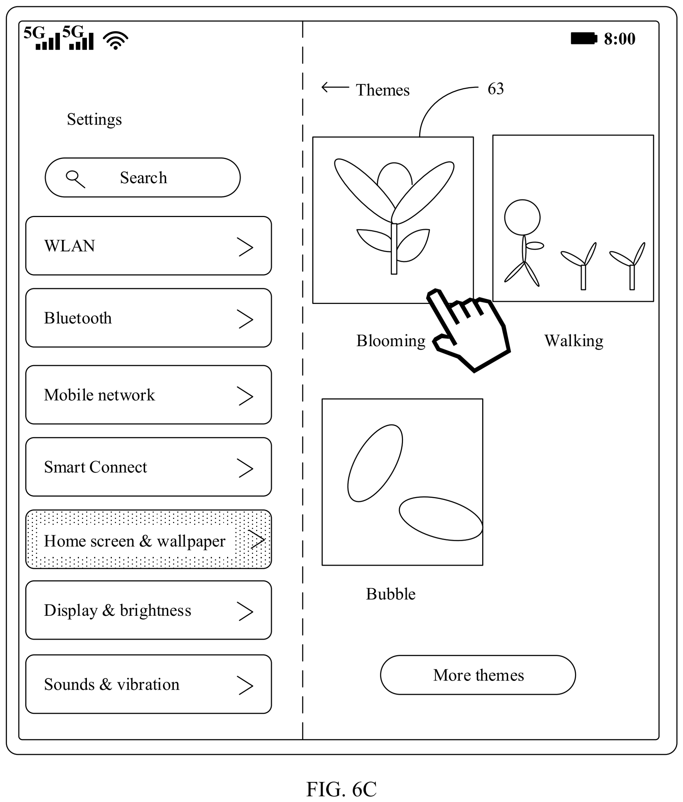

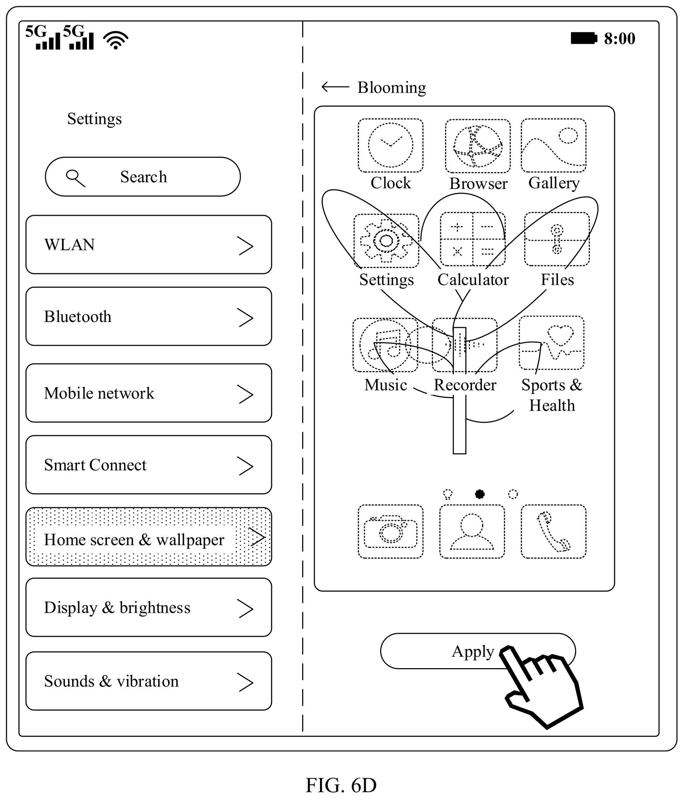

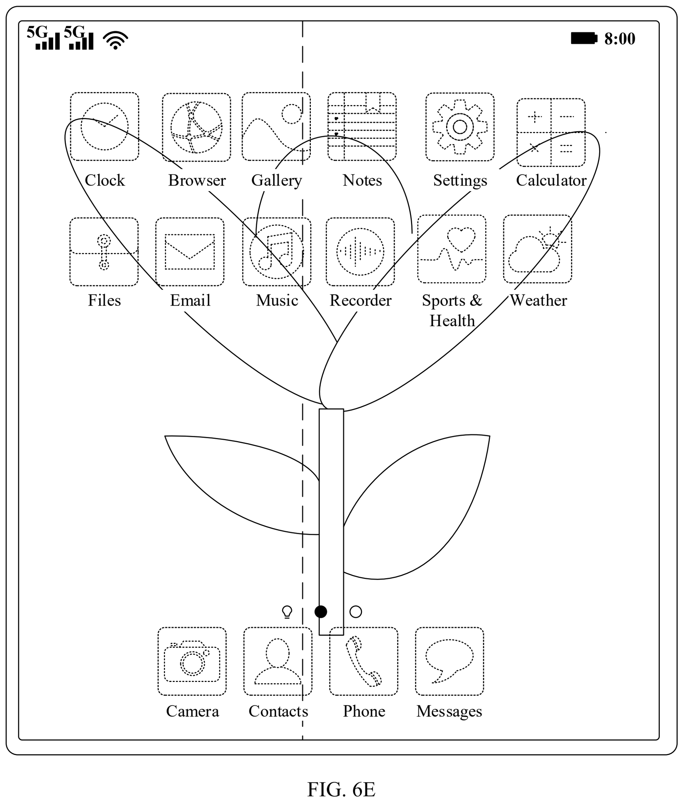

For example, the second operation may be an operation of setting the target theme. For example, the user taps an icon of a setting application shown in FIG. 6A. In response to the tap operation on the icon of the setting application, the foldable-screen mobile phone may display a corresponding setting interface, and the setting interface displays a home screen and wallpaper control. Then, the user may tap the home screen and wallpaper control. In response to the tap operation performed on the home screen and wallpaper control, the foldable-screen mobile phone may display an interface shown in FIG. 6B. The interface includes a theme control, and the theme control may be used to trigger display of a theme resource. Then, when the user taps the theme control, the foldable-screen mobile phone displays an interface shown in FIG. 6C in response to the tap operation on the theme control. The interface includes at least one theme option (for example, theme options such as "blooming", "walking", and "bubble" shown in FIG. 6C). The user may select a theme based on a requirement. After the user selects the blooming theme option, in response to the selection operation on the blooming theme option, the foldable-screen mobile phone may display a preview image corresponding to the blooming theme shown in FIG. 6D. The preview image represents a display effect after the foldable-screen mobile phone applies the blooming theme. After receiving the user operation of tapping the application control shown in FIG. 6D, which indicates that the user expects the foldable-screen mobile phone to apply the blooming theme, the foldable-screen mobile phone applies the blooming theme. Herein, the user operation of tapping the application control may be the foregoing second operation, and the blooming theme selected by the user may be the foregoing target theme. Then, when the foldable-screen mobile phone needs to display the wallpaper corresponding to the blooming theme, for example, the foldable-screen mobile phone receives a return-to-home screen operation, the foldable-screen mobile phone may display a wallpaper shown in FIG. 6E.

It may be understood that the foregoing operation process of setting a theme is merely an example, and the user may alternatively set the theme in another manner. This is not limited in this application.

S302: In response to the second operation, the foldable-screen mobile phone obtains configuration data of a first wallpaper corresponding to the target theme. The configuration data of the first wallpaper includes an offset of the first wallpaper.

The offset of the first wallpaper indicates a position offset of display content (or described as a display area) of the first wallpaper in the folded state relative to display content of the first wallpaper in the unfolded state. The offset of the first wallpaper may be used to determine a display part of the first wallpaper in the folded state. The display content of the first wallpaper in the unfolded state is the complete first wallpaper. A size of the display area of the first wallpaper in the unfolded state matches (for example, is the same as) a size of a screen-on area of a screen in the unfolded state. The display content of the first wallpaper in the folded state is partial content of the first wallpaper. In other words, the display area of the first wallpaper in the folded state is a partial area of the first wallpaper. A size of the display area of the first wallpaper in the folded state matches a size of the screen-on area of the screen in the folded state.

In an embodiment, each theme (such as the foregoing target theme) corresponds to one theme package. The theme package corresponding to the theme may include a configuration file corresponding to a wallpaper (such as the foregoing first wallpaper) corresponding to the theme, and the configuration file may include configuration data of the wallpaper, such as an offset of the wallpaper. In addition, the theme package may further include other information, such as a preview image after the theme is applied (for example, the preview image corresponding to the foregoing blooming theme). The information included in the theme package is not limited in this application.

In some embodiments, the configuration file corresponding to the wallpaper may include not only the offset of the wallpaper, but also at least one piece of configuration information among blur configuration information, dark mode configuration information, and spring animation stiffness configuration information of the wallpaper. It should be understood that when the wallpaper is a still wallpaper, the wallpaper does not have a dynamic playing process. Therefore, the configuration file corresponding to the wallpaper may not include the spring animation stiffness configuration information.

The blur setting information indicates whether the wallpaper supports a blur effect. For example, when the foldable-screen mobile phone displays the wallpaper in a screen-locked state, and when the user slides upward on the screen, if the blur setting information indicates that the blur effect is supported, the foldable-screen mobile phone blurs the wallpaper and displays the blurred wallpaper. For example, the blur setting information may be represented by support_background_blur. When a value of support_background_blur is true, it indicates that the wallpaper supports the blur effect. When the value of support_background_blur is false, it indicates that the wallpaper does not support the blur effect.

The dark mode configuration information indicates whether the wallpaper supports the dark mode. For example, the dark mode configuration information may be represented by support_dark_mode. When a value of support_dark_mod is true, it indicates that the wallpaper supports the dark mode. When the value of support_dark_mod is false, it indicates that the wallpaper does not support the dark mode.

The spring animation stiffness configuration information indicates a dynamic playing effect of the wallpaper. When the wallpaper is a live wallpaper, the wallpaper is equivalent to an animation. A stiffness value affects a playing speed of the animation. Stiffness configuration information of a pop-up animation is a stiffness value of the wallpaper. For example, the spring animation stiffness configuration information may be represented by fold-spring-stiffness. When a value of fold-spring-stiffness is 60, it indicates that the stiffness value of the wallpaper is 60.

In some embodiments, a format of the configuration file of the wallpaper may be an extensible markup language (extensible markup language, XML) format. Correspondingly, the configuration file is configured as follows:
<support_background_blur>true</support_background_blur>//The wallpaper supports the blur effect.
<support_dark_mode>true</support_dark_moder>//The wallpaper supports the dark mode.
<fold_spring_stiffness>15</fold_spring_stiffness>//The stiffness value of the wallpaper is 15.
<outfold _x_coordinate>100</outfold_x_coordinate>//The offset of the wallpaper is an offset of 100 pixels in the x direction.

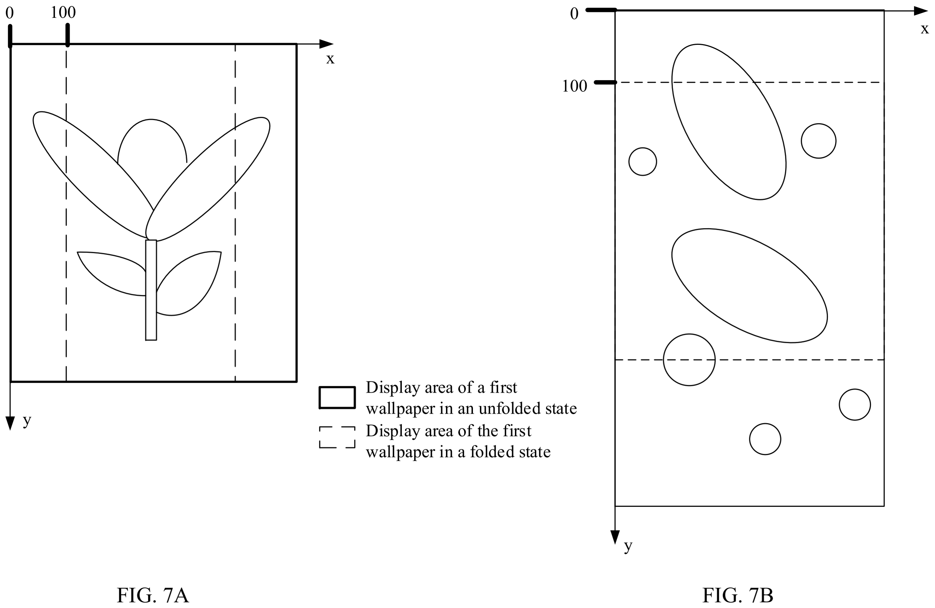

It may be understood that if the foldable-screen mobile phone is in a horizontal fold mode, when a device state of the foldable-screen mobile phone changes, a width of the foldable-screen mobile phone changes, but a height thereof does not change. Therefore, the offset of the wallpaper is an offset in the x direction. For example, the offset of the wallpaper is an offset of 100 pixels in the x direction. It is assumed that a left vertex of the first wallpaper is an origin. As shown in FIG. 7A, an offset of the display area of the first wallpaper in the folded state relative to the display area of the first wallpaper in the unfolded state in a lateral direction (that is, the x direction) is 100 pixels.

If the foldable-screen mobile phone is in a vertical fold mode (as shown in FIG. 1D), when the device state of the foldable-screen mobile phone changes, the height of the foldable-screen mobile phone changes, but the width thereof does not change. Therefore, the offset of the wallpaper is an offset in the y direction. For example, the offset of the wallpaper is an offset of 100 pixels in the y direction. It is assumed that a left vertex of the first wallpaper is an origin. As shown in FIG. 7B, an offset of the display area of the first wallpaper in the folded state relative to the display area of the first wallpaper in the unfolded state in a longitudinal direction (that is, the y direction) is 100 pixels.

The foregoing representation of the offset by using a pixel is merely an example, and the offset may alternatively be represented by using another unit, such as a millimeter. This is not limited in this application.

In some embodiments, the configuration data of the first wallpaper may not include the offset of the first wallpaper, but includes an offset mode of the first wallpaper. When a folding manner of the foldable-screen mobile phone is horizontal fold, the offset mode includes at least one of a center mode, a left-align mode, and a right-align mode. When a folding manner of the foldable-screen mobile phone is vertical fold, the offset mode includes at least one of a top-align mode, a bottom-align mode, and a center mode. In other words, the configuration data of the first wallpaper may include offset information of the first wallpaper, and the offset information includes an offset or an offset mode.

The offset mode of the wallpaper (for example, the first wallpaper) is described below by using an example in which the folding manner of the foldable-screen mobile phone is horizontal fold.

The center mode indicates that the display area of the first wallpaper in the folded state is centered relative to the display area of the first wallpaper in the unfolded state. In other words, the center mode indicates that the display content of the first wallpaper in the folded state is a middle part of the first wallpaper in the unfolded state.

The left-align mode indicates that the display area of the first wallpaper in the folded state is left-aligned relative to the display area of the first wallpaper in the unfolded state. In other words, the center mode indicates that the display content of the first wallpaper in the folded state is a left part of the first wallpaper in the unfolded state.

The right-align mode indicates that the display area of the first wallpaper in the folded state is right-aligned relative to the display area of the first wallpaper in the unfolded state. In other words, the center mode indicates that the display content of the first wallpaper in the folded state is a right part of the first wallpaper in the unfolded state.

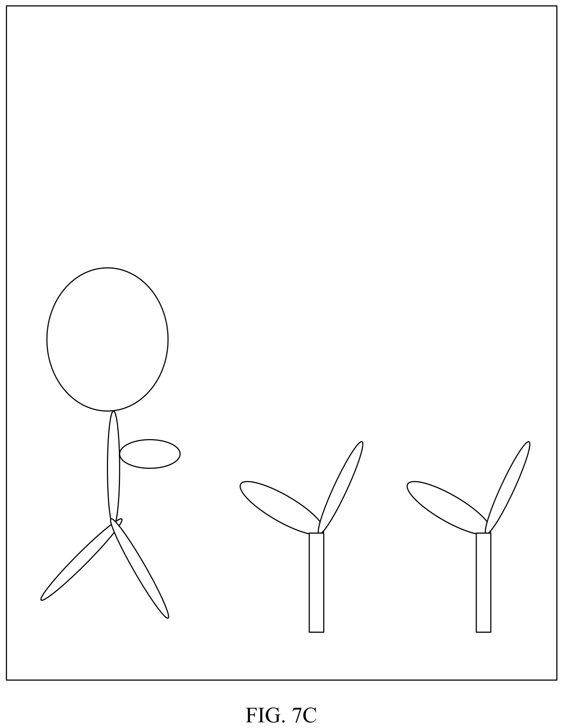

In some embodiments, in a case, the offset or offset mode of the wallpaper may be set based on an aesthetic requirement. For example, it is assumed that the foldable-screen mobile phone is in a horizontal fold mode. When a key object (such as a flower shown in FIG. 7A) on the wallpaper is located in the middle of the wallpaper, the offset mode of the wallpaper may be the center mode or the offset in the x direction is relatively centered, so as to display the key object to the greatest extent. When the key object on the wallpaper is located on the left side of the wallpaper, the offset mode of the wallpaper may be a left-align display mode, or a distance between the offset in the x direction and a vertex at an upper left corner of the wallpaper is relatively small. For example, a person on the wallpaper shown in FIG. 7C is located on the left side of the wallpaper. Therefore, the offset mode of the wallpaper may be the left-align mode, or the distance between the offset and the vertex at the upper left corner of the wallpaper is relatively small.

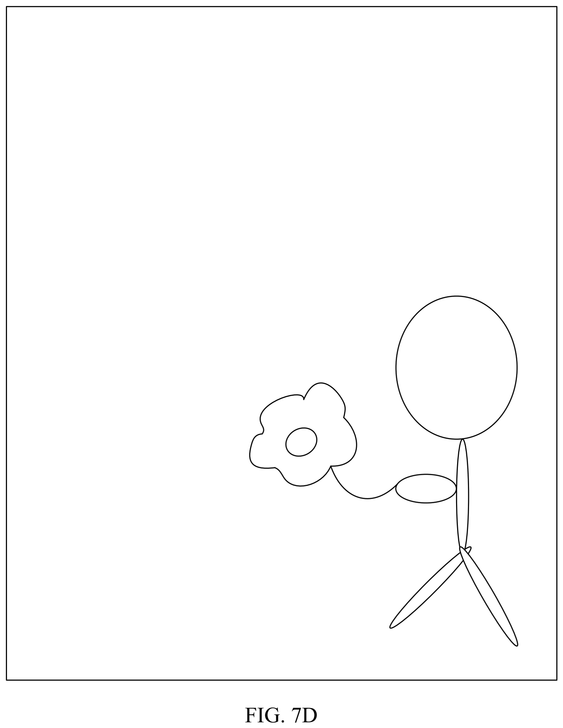

Similarly, when the key object on the wallpaper is located on the right side of the wallpaper, the offset mode of the wallpaper may be a right-align mode, or a distance between the offset in the x direction and a vertex at an upper left corner of the wallpaper is relatively large. For example, a person on the wallpaper shown in FIG. 7D is located on the right side of the wallpaper. The offset mode of the wallpaper may be the right-align mode, or the distance between the offset in the x direction and the vertex at the upper left corner of the wallpaper is relatively large. In another case, the user may set the offset or offset mode of the wallpaper based on a use requirement. When the user selects the wallpaper, the foldable-screen mobile phone may provide a corresponding selection control, so that the user selects an offset or an offset mode, or provide a corresponding input control (for example, a text box), so that the user inputs an offset or an offset mode, thereby meeting a personalized requirement of the user.

S303: The foldable-screen mobile phone writes the offset of the first wallpaper into a preset database.

For example, after obtaining the offset of the first wallpaper, the foldable-screen mobile phone may invoke a related write interface to write the offset of the first wallpaper as an input parameter, and write the offset of the first wallpaper into the preset database in a key-value manner, so that when the foldable-screen mobile phone in the folded state needs to display the first wallpaper, the foldable-screen mobile phone displays the first wallpaper by using the offset of the first wallpaper. The key may represent a field corresponding to the offset of the first wallpaper, and the value may represent a specific offset value.

In some embodiments, the preset database may be a local settings database of the foldable-screen mobile phone. Code for implementing the foregoing write interface may be the following code:

```
          private void setOutFoldOffsetToSettings(float offset) {
          Settings.Secure.putFloatForUser(mContext.getContentResolver().OUTFOLD_X_CO
 ORDINATE,offset,mContext.getUserId());
          Log.i(TAG,"setOutFoldOffsetToSettings,offset="+offset);
          }
```

OUTFOLD_X COORDINATE may be defined as public static final String OUTFOLD_X_COORDINATE="outfold_x_coordinate". mContext.getUserId() indicates an identifier of the current user.

OUTFOLD_X_COORDINATE represents a value, and offset represents a key.

It should be noted that when identifiers of a plurality of users (for example, names of the users) exist in the foldable-screen mobile phone, it indicates that the plurality of users share the foldable-screen mobile phone. Each user has corresponding space, which may be used to store content such as an application and a theme. Therefore, the preset database may include an offset of a wallpaper corresponding to each user identifier among the identifiers of the plurality of users. The foldable-screen mobile phone may jointly write the offset of the first wallpaper and the identifier of the current user into the preset database. In addition, the preset database may alternatively include only the offset of the wallpaper corresponding to the identifier of the current user. Therefore, the foldable-screen mobile phone may directly write the offset of the first wallpaper into the preset database without involving the identifier of the current user.

It should be understood that the foregoing user identifier may be added by using "add user" in the foldable-screen mobile phone.

In some embodiments, the preset database is dynamically updated, and may store only an offset of a wallpaper currently applied by the foldable-screen mobile phone, such as the offset of the first wallpaper, so that resource occupation caused by storing a wallpaper can be reduced, and the offset of the first wallpaper can be quickly read. To be specific, before the foldable-screen mobile phone writes an offset of a new wallpaper into the preset database, if the preset database already stores an offset of a wallpaper, the foldable-screen mobile phone may first delete the offset of the wallpaper. Then, the foldable-screen mobile phone may write the offset of the new wallpaper (that is, the first wallpaper) into the preset database.

Optionally, the preset database includes offsets of wallpapers corresponding to the identifiers of the plurality of users. When the preset database already stores the offset of the wallpaper corresponding to the identifier of the current user, the foldable-screen mobile phone may first delete the offset of the wallpaper corresponding to the identifier of the current user. Then, the foldable-screen mobile phone may write the offset of the first wallpaper into the preset database.

In some embodiments, the foldable-screen mobile phone may not write the offset of the first wallpaper into the preset database, but writes the offset into another local location of the foldable-screen mobile phone, such as a file or a buffer.

S304: The foldable-screen mobile phone creates a wallpaper window whose size is a size of a screen-on area of a current screen, and sets a size of a drawing area surface to the size of the screen-on area of the screen in an unfolded state.

The drawing area is used by the foldable-screen mobile phone to draw an object (such as the first wallpaper), and the drawing area determines a maximum range that can be drawn by the foldable-screen mobile phone. The wallpaper window is equivalent to a container that is used to determine an area that can be displayed by the foldable-screen mobile phone, and determines a range of content that is displayed by the foldable-screen mobile phone and that can be viewed by the user. For example, the wallpaper window in the folded state may display content in the display area of the first wallpaper in the folded state, and the wallpaper window in the unfolded state may display content in the display area of the first wallpaper in the unfolded state. The size of the wallpaper window is the same as the size of the screen-on area of the current screen of the foldable-screen mobile phone.

In this embodiment of this application, after determining the first wallpaper selected by the user, the foldable-screen mobile phone may first obtain the size of the screen-on area of the current screen. Then, the foldable-screen mobile phone may create a wallpaper window based on the size of the screen-on area of the current screen. In addition, the foldable-screen mobile phone allocates a drawing area (or described as creating a drawing area) to the wallpaper window, and sets a size of the drawing area to the size of the screen-on area of the screen in the unfolded state, that is, sets the size of the drawing area to the size of the screen, so that the foldable-screen mobile phone can directly display the first wallpaper by using the wallpaper window and the surface when the first wallpaper needs to be displayed.

The size of the drawing area is not limited to the size of the screen-on area of the current screen of the foldable-screen mobile phone. The size of the drawing area may be the same as the size of the screen-on area of the current screen of the foldable-screen mobile phone, that is, may be the same as or different from the size of the wallpaper window. For example, when the foldable-screen mobile phone is currently in the folded state, the size of the drawing area is greater than the size of the screen-on area of the current screen, that is, is greater than the size of the wallpaper window. When the foldable-screen mobile phone is currently in the unfolded state, the size of the drawing area is equal to the size of the screen-on area of the current screen, that is, is equal to the size of the wallpaper window.

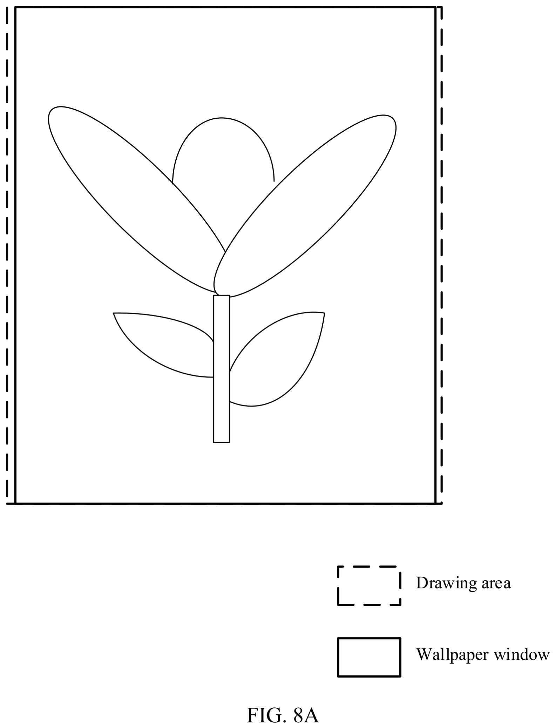

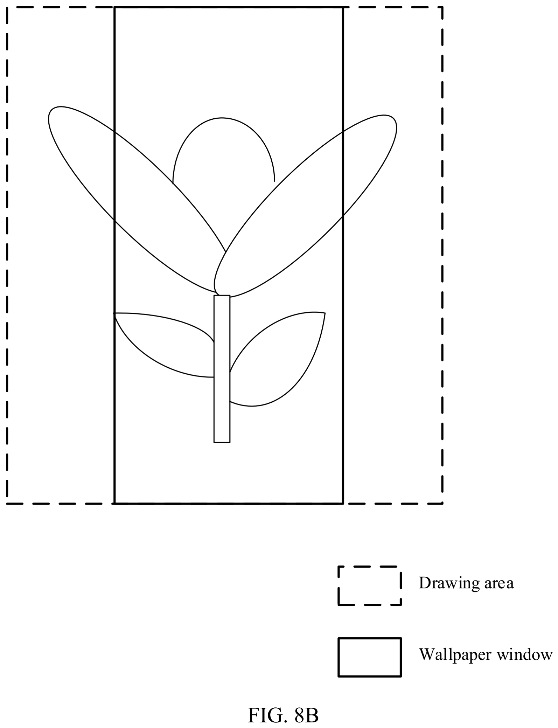

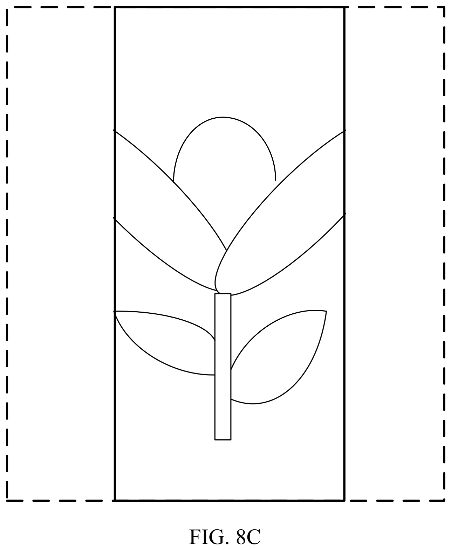

It should be noted that each wallpaper window corresponds to one surface, and the surface corresponds to one screen buffer. An object (for example, a view component or a wallpaper) needs to be drawn on the surface. It may be simply understood that the surface is equivalent to a canvas and may be used to draw content. The wallpaper window is equivalent to a frame placed on the canvas. When a canvas size is the same as a frame size, the user can view complete content of the canvas (as shown in FIG. 8A). When the foldable-screen mobile phone is in the folded state, the frame size is less than the canvas size (as shown in FIG. 8B), and the user can view content in the window, that is, partial content of the canvas (as shown in FIG. 8C), but cannot view complete content in the drawing area.

In some embodiments, to avoid repeated creation of the wallpaper window, the foldable-screen mobile phone may first determine whether the wallpaper window exists in the foldable-screen mobile phone, that is, determine whether the wallpaper window has not been destroyed. When the wallpaper window corresponding to the current device state exists in the foldable-screen mobile phone, the foldable-screen mobile phone does not need to repeatedly create a corresponding wallpaper window, and the foldable-screen mobile phone may directly display the first wallpaper by using the wallpaper window, thereby avoiding a waste of resources caused by repeated creation of the wallpaper window.

Similarly, the foldable-screen mobile phone may alternatively first determine whether the surface corresponding to the wallpaper window exists in the foldable-screen mobile phone, that is, determine whether the surface corresponding to the wallpaper window has not been destroyed. When the surface exists, the foldable-screen mobile phone does not need to allocate the surface, and does not need to set a size of the surface. When the surface does not exist, the foldable-screen mobile phone may allocate a surface and set a size of the surface.

In some embodiments, the foldable-screen mobile phone may invoke a preset setting interface (such as the public void setFixedSize(int width, int height) interface) based on the BaseSurfaceHolder class, to set the size of the surface. Herein, width represents a width of the screen-on area of the screen in the unfolded state (for example, a width of the screen-on area of the screen in the unfolded state shown in FIG. 1C(1) to FIG. 1C(3)), and height represents a height of the screen-on area of the screen in the unfolded state (for example, a height of the screen-on area of the screen in the unfolded state shown in FIG. 1C(1) to FIG. 1C(3)). A code file corresponding to the preset setting interface may be stored in the /frameworks/base/core/java/android/service/wallpaper/WallpaperService.java file, or certainly may be stored in another file. This is not limited in this application.

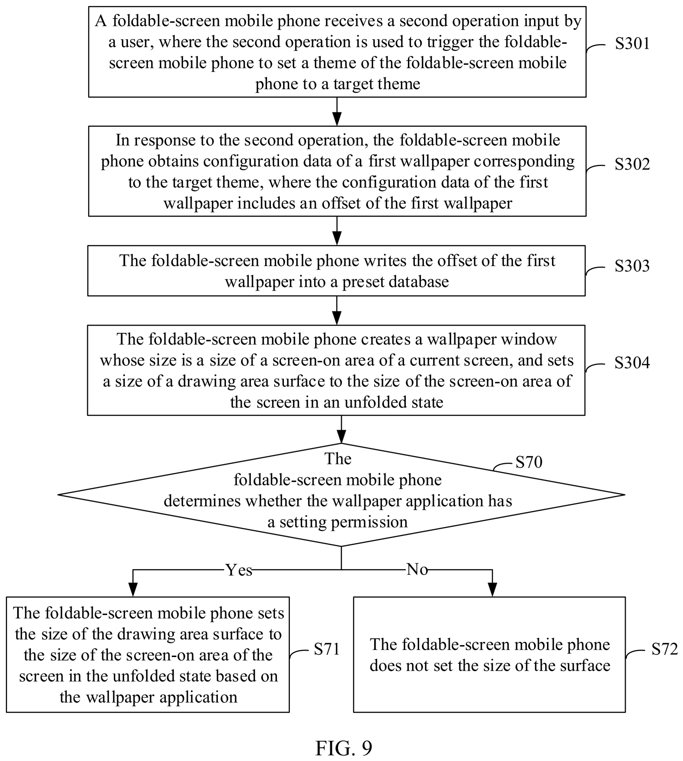

In some embodiments, the foldable-screen mobile phone may set the size of the surface by using a wallpaper application. For details about setting the size of the surface by using the wallpaper application, refer to S70-S72 shown in FIG. 9.

S70: The foldable-screen mobile phone determines whether the wallpaper application has a setting permission.

To improve security, the foldable-screen mobile phone may first determine whether the wallpaper application has a setting permission. When the wallpaper application has the setting permission, it indicates that security of the wallpaper application is high, and the wallpaper application has the permission to set the size of the surface, that is, has the permission to invoke the foregoing preset setting interface. In this case, the foldable-screen mobile phone may perform S71.

When the wallpaper application does not have the setting permission, it indicates that security of the wallpaper application is low, and the wallpaper application does not have the permission to set the size of the surface, that is, cannot invoke the preset setting interface to set the size of the surface. In this case, the foldable-screen mobile phone may perform S72.

S71: The foldable-screen mobile phone sets the size of the drawing area surface to the size of the screen-on area of the screen in the unfolded state based on the wallpaper application.

For example, the wallpaper application may invoke the foregoing preset setting interface to set the size of the surface.

S72: The foldable-screen mobile phone does not set the size of the surface.

In some embodiments, the foldable-screen mobile phone may determine, by using a preset whitelist, whether the wallpaper application has the setting permission. The preset whitelist includes an identifier of at least one application. When an identifier of the wallpaper application exists in the preset whitelist, it indicates that the wallpaper application has the setting permission, that is, has the permission to invoke the foregoing preset setting interface to set the size of the surface. When the identifier of the wallpaper application does not exist in the preset whitelist, it indicates that the wallpaper application does not have the setting permission, that is, does not have the permission to invoke the foregoing preset setting interface to set the size of the surface. The identifier of the wallpaper application may be information that can indicate the wallpaper application, such as a package name, a process identifier, and a name of the wallpaper application.

In some embodiments, the foldable-screen mobile phone may invoke a preset adding interface to add an application to the whitelist. For example, the preset adding interface is as follows:

```
          @UnsupportedAppUsage
          public void setFixedSizeAllowed(boolean allowed).
```

In addition, the foldable-screen mobile phone may alternatively determine, in another manner, whether the wallpaper application has the setting permission. For example, the foldable-screen mobile phone queries a preset location for a permission of the wallpaper application. When the permission includes the setting permission, it indicates that the wallpaper application has the setting permission. Otherwise, the wallpaper application does not have the setting permission.

In this embodiment of this application, a limitation of a permission can prevent any application from setting the size of the surface, so as to prevent the size of the surface from being tampered with by some applications, thereby ensuring security of wallpaper setting, improving stability of wallpaper display, and preventing the size of the wallpaper displayed by the foldable-screen mobile phone from being constantly changed. For example, when the foldable-screen mobile phone is in the unfolded state, because the size of the surface is reduced, the size of the wallpaper displayed by the foldable-screen mobile phone does not match the size of the screen-on area of the screen, thereby ensuring user experience.

S305: The foldable-screen mobile phone draws the first wallpaper on the foregoing surface.

In this embodiment of this application, the foldable-screen mobile phone draws the first wallpaper on the surface, and the complete first wallpaper is drawn on the surface. The size of the first wallpaper matches the size of the screen-on area of the screen in the unfolded state.

In some embodiments, the foldable-screen mobile phone may also draw the first wallpaper when the first wallpaper needs to be displayed. If a first operation used to trigger the first wallpaper is received, the first wallpaper is drawn on the foregoing surface. An occasion for drawing the first wallpaper is not limited in this application.

The process of setting the theme of the foldable-screen mobile phone is described above. A process of displaying a wallpaper corresponding to the theme is further described below.

S306: The foldable-screen mobile phone determines, in response to a first operation, whether a device state of the foldable-screen mobile phone is a folded state.

The first operation may include a return-to-home screen operation, and the return-to-home screen operation is used to trigger the foldable-screen mobile phone to display the home screen, that is, is used to trigger the foldable screen to display a home screen wallpaper. Certainly, the first operation may further include another operation that can trigger the foldable-screen mobile phone to display the wallpaper. This is not limited in this application.

In this embodiment of this application, when the foldable-screen mobile phone receives the first operation, it indicates that the first wallpaper needs to be displayed based on the foregoing surface and the foregoing wallpaper window. The size of the wallpaper window limits the display content of the surface, and the size of the wallpaper window is related to the size of the screen-on area of the current screen of the foldable-screen mobile phone, that is, is related to the device state of the foldable-screen mobile phone. Therefore, the foldable-screen mobile phone may determine whether the current device state is the folded state. When the current device state is the folded state, it indicates that the foregoing setting of the first wallpaper is performed when the foldable-screen mobile phone is in the folded state. Because the size of the wallpaper window in the folded state is different from the size of the surface, the foldable-screen mobile phone needs to determine the display content of the first wallpaper by using the offset of the first wallpaper, that is, determine partial content of the first wallpaper that needs to be displayed in the window. In this case, the foldable-screen mobile phone may perform S306.

When the current device state is not the folded state, that is, when the current device state is the unfolded state, it indicates that the foregoing setting of the first wallpaper is performed when the foldable-screen mobile phone is in the unfolded state. Because the size of the window in the unfolded state is the same as the size of the surface, the foldable-screen mobile phone may display complete content in the drawing area, that is, display the complete first wallpaper, and does not need to determine the display content of the first wallpaper by using the offset of the first wallpaper. In this case, the foldable-screen mobile phone may perform S310.

S307: The foldable-screen mobile phone reads the offset of the first wallpaper from the preset database.

S308: The foldable-screen mobile phone displays, in the foregoing window, partial content of the first wallpaper on the surface based on the offset of the first wallpaper.

In this embodiment of this application, the mobile phone may determine a position of the display area of the first wallpaper in the folded state (or referred to as a position of a target display area of the first wallpaper) by using the offset of the first wallpaper and the size of the screen-on area of the current screen, that is, the size of the screen-on area of the screen in the folded state. The content in the display area of the first wallpaper is the content of the first wallpaper displayed by the foldable-screen mobile phone in the folded state, that is, the display content of the first wallpaper in the folded state (or referred to as target display content of the first wallpaper). In other words, the offset of the first wallpaper and the size of the screen-on area of the current screen are used to determine a position of the wallpaper window relative to the surface. Then, the foldable-screen mobile phone may display the target display content in the wallpaper window. Because the size of the wallpaper window is less than the size of the surface, the wallpaper window does not display content other than the target display content on the first wallpaper.

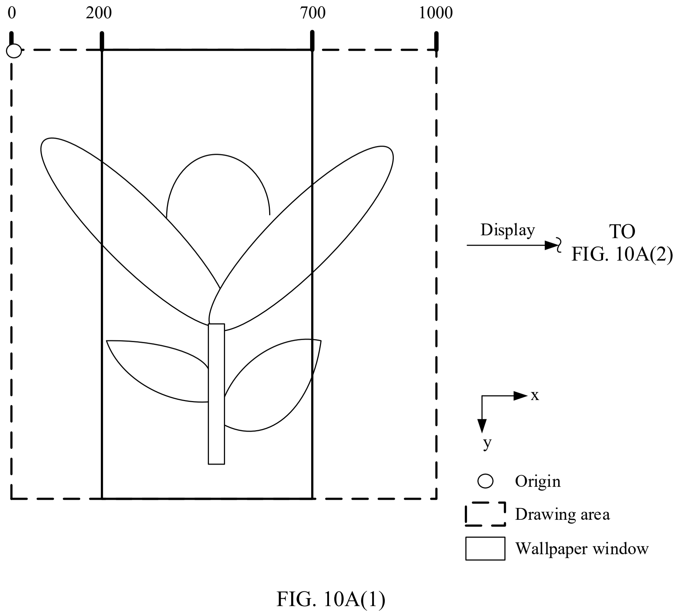

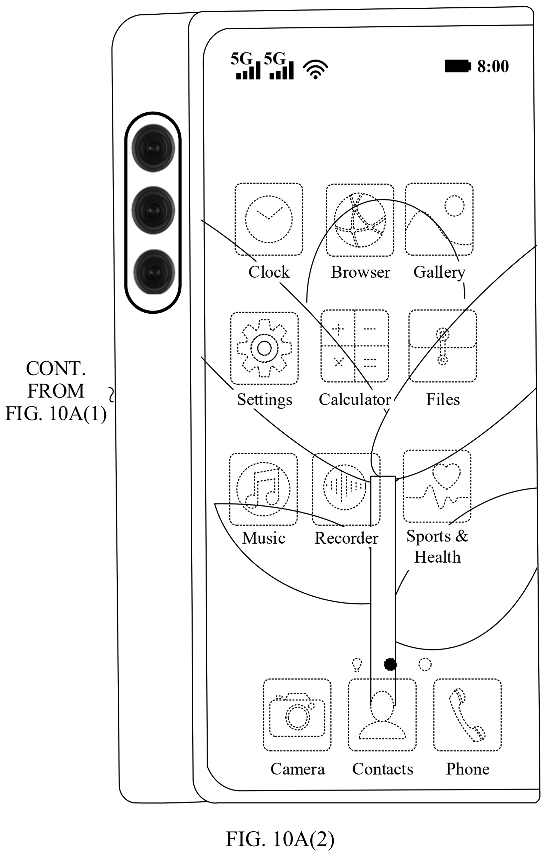

For example, the screen of the foldable-screen mobile phone is in a horizontal fold mode. Whether the screen is folded or unfolded, a height of the display area of the foldable-screen mobile phone does not change, but a width thereof changes. Correspondingly, the offset of the first wallpaper is an offset in a width direction, that is, in the x direction. It is assumed that the offset of the first wallpaper in the x direction is 200 pixels (px). This indicates that a position of a 200th pixel in the x direction is a start position of a left vertex of the wallpaper window. As shown in FIG. 10A(1), the width of the drawing area is 1000 px, coordinates of the left vertex are (0, 0), and coordinates of a right vertex are (1000, 0). The width of the wallpaper window in the folded state is 500 px. Correspondingly, x coordinates of the position of the target display area of the first wallpaper may be 200 and 700. In other words, an area that is formed by pixels whose x coordinates are 200 to 700 on the first wallpaper represents the display area of the first wallpaper in the folded state, and the foldable-screen mobile phone displays content in the display area (as shown in FIG. 10A(2)). 200 may represent a coordinate of a left vertex of the target display area, and 700 may represent a coordinate of a right vertex of the target display area.

In some embodiments, when the size of the first wallpaper is the same as the size of the surface, complete content of the first wallpaper is drawn on the surface (for example, complete content of the first wallpaper is drawn on the surface shown in FIG. 10A(1)). In this case, the offset of the first wallpaper in the x direction represents an offset in the x direction with a vertex of the first wallpaper (for example, a left vertex of the first wallpaper) as an origin. For example, when the offset of the first wallpaper in the x direction is 200, it indicates that a position of a 200th pixel in the x direction with the left vertex of the first wallpaper as an origin is a start position of a left vertex of the wallpaper window.

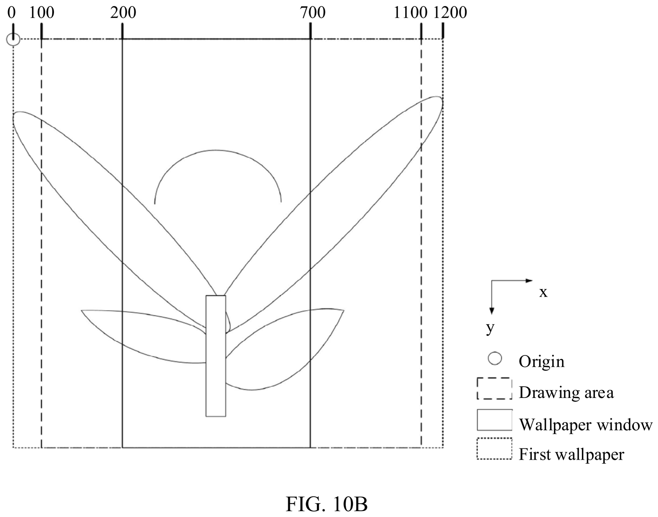

When the size of the first wallpaper is greater than the size of the surface, for example, when the user customizes the display content of the wallpaper, partial content of the first wallpaper is drawn on the surface. In this case, the offset of the first wallpaper in the x direction represents an offset in the x direction with a position of a vertex (for example, a left vertex) of the surface on the first wallpaper as an origin. For example, the width of the first wallpaper is 1200, and the width of the surface is 1000. Therefore, only partial content of the first part can be drawn on the surface (as shown in FIG. 10B). The position of the left vertex of the surface on the first wallpaper is (100,0). When the offset of the first wallpaper in the x direction is 200, it indicates that a position of a 200th pixel in the x direction with (100,0) as an origin is a start position of a left vertex of the wallpaper window. To be specific, the start position of the left vertex of the wallpaper window is actually a position of a 300th pixel of the first wallpaper.

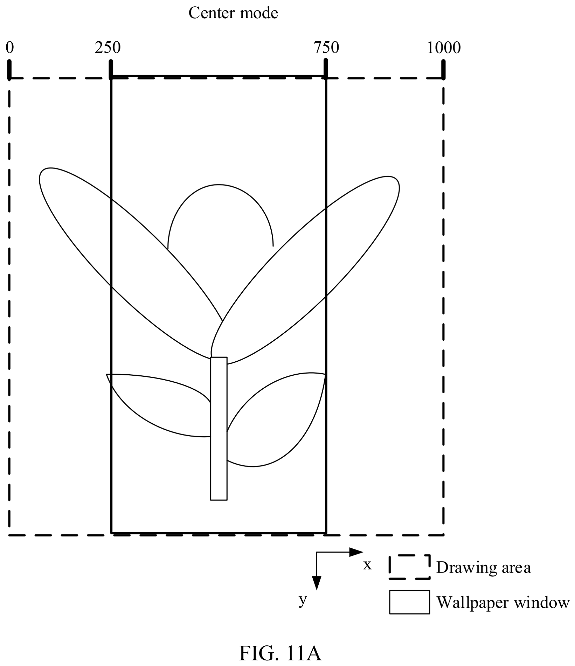

In some embodiments, the foldable-screen mobile phone may directly display partial content of the first wallpaper in the foregoing window by using the offset mode. In an example, if the offset mode of the first wallpaper is the center mode, the first wallpaper is displayed in the middle of the window. For example, as shown in FIG. 11A, the size of the drawing area is 1000*2000, that is, the size of the first wallpaper is 1000*2000. The size of the wallpaper window is 500*2000. When the first wallpaper is displayed in the middle, the x coordinates of the position of the target display area of the first wallpaper (that is, the display area of the first wallpaper in the folded state) may be 250 and 750. To be specific, the target display area of the first wallpaper is the display area of the first wallpaper in the folded state that is represented by an area that is formed by pixels whose x coordinates are 250 to 750 on the first wallpaper, and the target display content is content that is formed by pixels whose x coordinates are 250 to 750 on the first wallpaper.

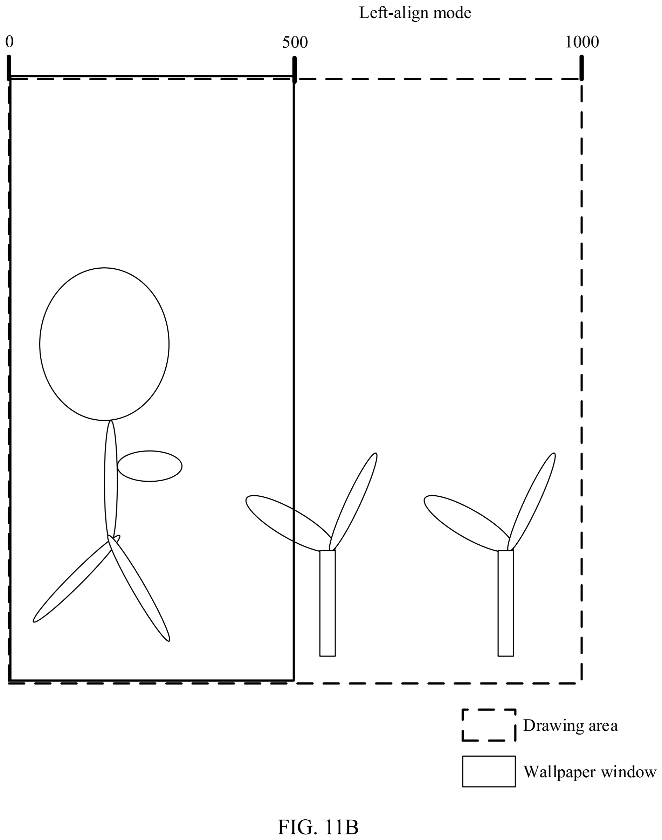

In another example, if the offset mode of the first wallpaper is the left-align mode, the first wallpaper is displayed on the left side of the window. For example, as shown in FIG. 11B, the size of the drawing area is 1000*2000. The size of the wallpaper window is 500*2000. When the first wallpaper is displayed on the left, the x coordinates of the position of the target display area of the first wallpaper may be 0 and 500. To be specific, the target display content of the first wallpaper is content that is formed by pixels whose x coordinates are 0 to 500 on the first wallpaper.

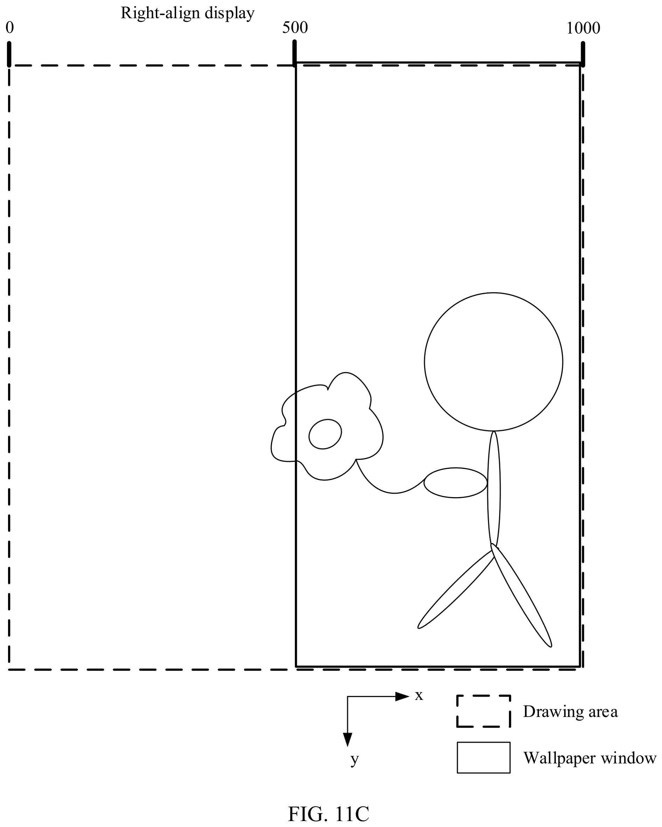

In another example, if the offset mode of the first wallpaper is the right-align mode, the first wallpaper is displayed on the left side of the window. For example, as shown in FIG. 11C, the size of the drawing area is 1000*2000. The size of the wallpaper window is 500*2000. When the first wallpaper is displayed on the right, the x coordinates of the position of the target display area of the first wallpaper may be 500 and 1000. To be specific, the target display content of the first wallpaper is content that is formed by pixels whose x coordinates are 500 to 1000 on the first wallpaper.

S309: If the foldable-screen mobile phone is switched from the folded state to the unfolded state, the foldable-screen mobile phone adjusts the size of the wallpaper window to the size of the screen-on area of the screen in the unfolded state.

In this embodiment of this application, in a process in which the user uses the foldable-screen mobile phone, the user may unfold or fold the foldable-screen mobile phone. During display of partial content of the first wallpaper, that is, during display of the first wallpaper, when the device state of the foldable-screen mobile phone is switched from the folded state to the unfolded state, the foldable-screen mobile phone needs to adjust the size of the wallpaper window to the size of the screen-on area of the screen in the unfolded state, that is, ensure that the size of the wallpaper window matches the screen-on area of the screen of the foldable-screen mobile phone in the unfolded state. In addition, the foldable-screen mobile phone does not need to allocate or set the size of the surface corresponding to the wallpaper window again.

For example, first, the foldable-screen mobile phone in the folded state displays partial content of the first wallpaper. Then, during display of the first wallpaper, the user unfolds the foldable-screen mobile phone, and the device state of the foldable-screen mobile phone is switched from the folded state to the unfolded state. Because the foldable-screen mobile phone still displays the first wallpaper, the wallpaper window used to display the first wallpaper has not been destroyed, and the foldable-screen mobile phone does not need to create the wallpaper window again. The mobile phone may directly adjust the size of the wallpaper window to the size of the screen-on area of the screen in the unfolded state.

S310: The foldable-screen mobile phone displays the complete first wallpaper in the adjusted wallpaper window.

In this embodiment of this application, the size of the surface is the same as the size of the adjusted wallpaper window (that is, the wallpaper window in the unfolded state). Therefore, the adjusted wallpaper window may display all drawing content on the surface, that is, display the complete first wallpaper. In addition, although sizes of the wallpaper window before and after the adjustment are different, the sizes of the wallpaper window correspond to the same drawing area, the drawing area does not need to be allocated again, and the size of the drawing area does not need to be set again. Therefore, when switching from the folded state to the unfolded state, that is, displaying the first wallpaper that matches the screen-on area of the screen in the unfolded state, the foldable-screen mobile phone does not need to switch display of the first wallpaper, but displays content other than the target display content in the drawing area on the basis of the originally displayed content of the first wallpaper, thereby avoiding a problem of sudden picture change, that is, a problem of blinking during switching.

In some embodiments, the foldable-screen mobile phone switches from the folded state to the unfolded state, and may dynamically display the first wallpaper in a manner of gradually increasing the display content of the first wallpaper. The foldable-screen mobile phone may determine a display speed based on the foregoing offset and a first preset time, so as to gradually display remaining content of the first wallpaper by using the display speed until the complete first wallpaper is displayed. The first preset time may indicate a time required for the foldable-screen mobile phone to switch from the folded state to a fully unfolded state. The fully unfolded state indicates that a folding angle of the foldable-screen mobile phone is 180 degrees.

For example, the offset includes an offset in the x direction. The display speed may include a left display speed and a right display speed. The foldable-screen mobile phone may calculate a first difference (that is, the offset in the x direction) between coordinates of a left vertex of the target display area and coordinates of a left vertex of the drawing area, and calculate a second difference between coordinates of a right vertex of the target display area and coordinates of a right vertex of the drawing area. Then, the mobile phone may calculate a ratio of the first difference to the first preset time to obtain the left display speed, and calculate a ratio of the second difference to the first preset time to obtain the right display speed. Then, the foldable-screen mobile phone may slowly expand a left part of the display area of the first wallpaper based on the left display speed, that is, increase the display content on the left, and slowly expand a right part of the display area of the first wallpaper based on the right display speed, that is, increase the display content on the right. For example, the display area of the first wallpaper in the folded state is the area that is formed by pixels whose x coordinates are 250 to 750 shown in FIG. 11A, the left display speed is 50 pixels/second, and the right display speed is also 50 pixels/second. In this case, after the foldable-screen mobile phone switches from the folded state to the unfolded state for one second, the display area of the first wallpaper becomes an area that is formed by pixels whose x coordinates are 300 to 800, thereby implementing dynamic display of the wallpaper, enhancing a visual effect, and increasing interestingness.

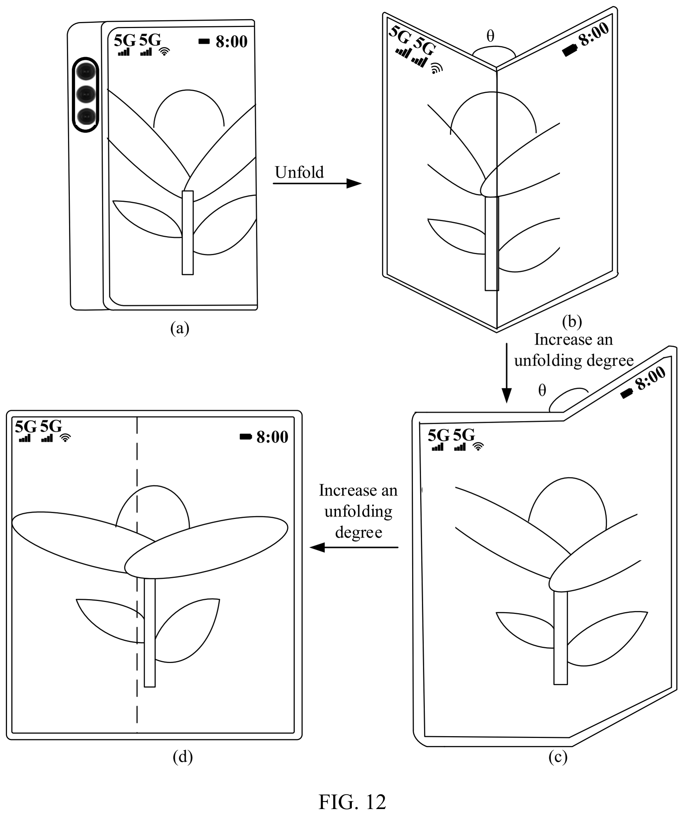

For example, first, the foldable-screen mobile phone in the folded state displays the wallpaper shown in (a) in FIG. 12. Then, the device state of the foldable-screen mobile phone changes, that is, is switched from the folded state to the unfolded state, and the foldable-screen mobile phone directly displays the wallpaper shown in (b) in FIG. 12. Compared with the wallpaper shown in (a) in FIG. 12, the wallpaper shown in (b) in FIG. 12 includes more content. Then, as an unfolding degree of the foldable-screen mobile phone increases, content of a lock screen wallpaper displayed by the foldable-screen mobile phone gradually increases, for example, content of the wallpaper shown in (c) in FIG. 12 is more than content of the wallpaper shown in (b) in FIG. 12, until a complete wallpaper shown in (d) in FIG. 12 is displayed. To put it simply, a process shown in (a)-(d) in FIG. 12 may be understood as a process of slowly expanding the wallpaper window, so as to display other content in the drawing area, that is, a process of slowly increasing the content of the wallpaper displayed by the foldable-screen mobile phone.

It should be noted that the wallpaper shown in (a)-(d) in FIG. 12 may be the home screen wallpaper. To facilitate display of the display effect of the wallpaper, no icon of the application is displayed on the wallpaper. In an actual application, the home screen wallpaper includes an icon of the application. In addition, the dynamic effect of the wallpaper presented in (a)-(d) in FIG. 12 is merely an example. An effect of wallpaper presentation during unfolding of the foldable-screen mobile phone may alternatively be another effect. This is not limited in this application.

In some other embodiments, the foldable-screen mobile phone switches from the folded state to the unfolded state, so that the complete first wallpaper can be directly displayed, and fast and complete display of the first wallpaper can be implemented.

In some embodiments, when the first wallpaper is a live wallpaper, if the device state of the foldable-screen mobile phone changes during display of the first wallpaper, an animation corresponding to the first wallpaper is played when the display content of the first wallpaper changes, thereby implementing a dynamic display effect of the first wallpaper. For example, as shown in (a) in FIG. 12 to (d) in FIG. 12, during display of the flower wallpaper, the foldable-screen mobile phone is unfolded, and in a process of changing content of the flower wallpaper displayed by the foldable-screen mobile phone, an animation corresponding to the flower wallpaper is also dynamically displayed, that is, a flower blooming process is displayed.

It should be noted that, when the foldable-screen mobile phone displays the first wallpaper, if the device state of the foldable-screen mobile phone does not change, the foldable-screen mobile phone may not play an animation corresponding to the first wallpaper. In this case, the first wallpaper is equivalent to a still wallpaper, so as to reduce power consumption. For example, when the foldable-screen mobile phone displays the first wallpaper in the unfolded state, the animation corresponding to the live wallpaper is not played. However, in a process in which the foldable-screen mobile phone switches from the unfolded state to the folded state, the animation corresponding to the first wallpaper is played. When the folding angle of the foldable-screen mobile phone reaches a preset angle value (for example, 0), the foldable-screen mobile phone stops playing the animation. Certainly, when the foldable-screen mobile phone displays the first wallpaper, regardless of whether the device state of the foldable-screen mobile phone changes, the foldable-screen mobile phone may play the animation corresponding to the first wallpaper.

In some embodiments, during display of partial content of the first wallpaper, if the device state of the foldable-screen mobile phone does not change, that is, the device state of the foldable-screen mobile phone is not switched from the folded state to the unfolded state, the foldable-screen mobile phone does not need to perform S309 and S310.

It should be noted that the foldable-screen mobile phone actually displays the first wallpaper in the wallpaper window by using the display of the foldable-screen mobile phone, and the user can view the first wallpaper displayed in the wallpaper window. The above-described sequence of drawing the first wallpaper in the drawing area and displaying the first wallpaper in the wallpaper window is merely an example. The foldable-screen mobile phone may alternatively draw the first wallpaper directly in the drawing area and the wallpaper window, and after receiving the first operation, invoke the wallpaper window to display the first wallpaper in the drawing area.

In some embodiments, when the foldable-screen mobile phone is in the folded state, and when the foldable-screen mobile phone needs to display the first wallpaper, the foldable-screen mobile phone needs to read the offset of the first wallpaper from the preset database. When the foldable-screen mobile phone in the folded state displays the first wallpaper for a plurality of times, the foldable-screen mobile phone may read the offset of the first wallpaper from the preset database each time the foldable-screen mobile phone needs to display the first wallpaper. For example, when the foldable-screen mobile phone in the folded state receives the return-to-home screen operation, the foldable-screen mobile phone reads the offset of the first wallpaper from the preset database, so as to display the home screen wallpaper by using the offset of the first wallpaper. When the user taps an icon of an application 1 on the home screen wallpaper, the foldable-screen mobile phone starts the application 1. Then, when the user returns to the home screen from the application 1, that is, when the user inputs the return-to-home screen operation, the foldable-screen mobile phone in the folded state receives the return-to-home screen operation again. In response to the return-to-home screen operation, the foldable-screen mobile phone reads the offset of the first wallpaper from the preset database again, so as to display the home screen wallpaper by using the offset of the first wallpaper. Alternatively, the foldable-screen mobile phone only needs to read the offset of the first wallpaper once. When the device state is switched to the unfolded state and then switched to the folded state, the foldable-screen mobile phone continues to read the offset of the first wallpaper once.

S311: The foldable-screen mobile phone displays, in the wallpaper window, the complete first wallpaper on the surface.

In this embodiment of this application, when the current device state is not the folded state, that is, when the current device state is the unfolded state, because the size of the wallpaper window in the unfolded state is the same as the size of the surface, the foldable-screen mobile phone may display complete content in the drawing area, that is, display the complete first wallpaper (or described as displaying the first wallpaper in a first interface in full screen). There is no need to determine, by using the offset of the first wallpaper, the content displayed in the wallpaper window, and there is no need to read the offset of the first wallpaper from the preset database.

S312: If the foldable-screen mobile phone switches from the unfolded state to the folded state, the foldable-screen mobile phone adjusts the size of the wallpaper window to the size of the screen-on area of the screen in the folded state, and the foldable-screen mobile phone reads the offset of the first wallpaper from the preset database.

S313: The foldable-screen mobile phone displays partial content of the first wallpaper in the adjusted window based on the offset of the first wallpaper.

In this embodiment of this application, during display of the first wallpaper, if the device state of the foldable-screen mobile phone changes, that is, when the device state of the foldable-screen mobile phone is switched from the folded state to the unfolded state, the foldable-screen mobile phone needs to adjust the size of the wallpaper window to the size of the screen-on area of the screen in the folded state, that is, ensure that the size of the wallpaper window matches the screen-on area of the screen of the foldable-screen mobile phone in the folded state. In addition, the foldable-screen mobile phone does not need to allocate or set the size of the surface corresponding to the wallpaper window again.

Then, the size of the surface is less than the size of the adjusted wallpaper window. Therefore, the adjusted wallpaper window displays only partial content drawn on the surface, that is, displays partial content of the first wallpaper (the partial content of the first wallpaper may also be referred to as a second wallpaper, that is, the second wallpaper is displayed in a second interface). In addition, although sizes of the wallpaper window before and after the adjustment are different, the sizes of the wallpaper window correspond to the same surface. Therefore, when switching from the folded state to the unfolded state, that is, in the process of displaying the first wallpaper that matches the screen-on area of the screen in the folded state, the foldable-screen mobile phone does not need to switch display of the first wallpaper, but reduces the display content of the first wallpaper on the basis of the originally displayed first wallpaper, thereby avoiding a problem of sudden picture change.

For example, during display of the first wallpaper, the user folds the foldable-screen mobile phone, and the device state of the foldable-screen mobile phone is switched from the unfolded state to the folded state. Because the foldable-screen mobile phone displays the first wallpaper, the wallpaper window used to display the first wallpaper has not been destroyed, and the foldable-screen mobile phone does not need to create the wallpaper window again. The mobile phone may directly adjust the size of the wallpaper window to the size of the screen-on area of the screen in the folded state. In addition, the size of the adjusted wallpaper window is less than the size of the drawing area, and the adjusted wallpaper window cannot display the complete first wallpaper. Therefore, the foldable-screen mobile phone may read the offset of the first wallpaper from the preset database, so as to determine, by using the offset of the first wallpaper, a coordinate point for moving the wallpaper window during switching between a large screen and a small screen, that is, determine content to be displayed in the adjusted wallpaper window, so as to display partial content of the first wallpaper in the adjusted wallpaper window.

In some embodiments, similar to the above-described wallpaper display process when the foldable-screen mobile phone switches from the folded state to the unfolded state, the foldable-screen mobile phone switches from the unfolded state to the folded state, and may dynamically display the first wallpaper in a manner of gradually reducing the display content of the first wallpaper. The foldable-screen mobile phone may determine a shrink speed of the wallpaper window based on the foregoing offset and a second preset time, so as to gradually reduce the display content of the first wallpaper by using the shrink speed, until the foregoing content in the display area of the first wallpaper in the folded state is displayed, that is, the content in the target display area of the first wallpaper is displayed. The second preset time may indicate a time required for the foldable-screen mobile phone to switch from the unfolded state to a fully folded state. This process may be simply understood as slowly shrinking the wallpaper window, so as to reduce the display content in the drawing area. The fully unfolded state indicates that a folding angle of the foldable-screen mobile phone is 0 degrees. A process of calculating the shrink speed is similar to the foregoing process of calculating the display speed, and details are not described herein again.

Alternatively, the foldable-screen mobile phone switches from the unfolded state to the folded state, and may directly display the content in the target display area of the first wallpaper.

In some embodiments, during display of partial content of the first wallpaper, if the device state of the foldable-screen mobile phone does not change, that is, the device state of the foldable-screen mobile phone is not switched from the folded state to the unfolded state, the foldable-screen mobile phone does not need to perform S312 and S313.

In this embodiment of this application, when obtaining a target theme selected by the user, the foldable-screen mobile phone creates, based on the current device state of the foldable-screen mobile phone, a wallpaper window that matches the size of the screen-on area of the current screen, and sets a size of a surface corresponding to the wallpaper window to the size of the screen-on area of the screen in the unfolded state. In other words, the size of the surface is unrelated to the current device state of the foldable-screen mobile phone. The foldable-screen mobile phone may draw the first wallpaper on the surface. When the first wallpaper needs to be displayed, partial or complete content on the surface is displayed by using the wallpaper window, so as to implement display of the first wallpaper. Then, during display of the first wallpaper, if the device state changes, the size of the wallpaper window may be directly adjusted, so as to display the original content on the surface by using the adjusted wallpaper window, so that the size of the display content matches the size of the screen-on area of the screen in the changed device state. There is no need to set a surface that matches the size of the screen-on area of the screen in the changed device state, so as to draw the first wallpaper by using the new surface, thereby avoiding a problem that a surface needs to be set again after the device state changes, and the first wallpaper needs to be drawn on the new surface, and consequently, there is no content to be displayed in the wallpaper window within a specific time, and the wallpaper window can continue to display content only after the first wallpaper is drawn on the new surface, and further avoiding a problem of sudden picture change.

In some embodiments, after the user sets a theme, the foldable-screen mobile phone may create a wallpaper window, set the size of the drawing area, and draw the first wallpaper in the drawing area, so as to implement preparation for displaying the first wallpaper, so that the first wallpaper can be quickly displayed when the first wallpaper needs to be displayed. Then, after the foldable-screen mobile phone receives the first operation input by the user, it indicates that the foldable-screen mobile phone needs to display the first wallpaper corresponding to the theme. In response to the first operation, the foldable-screen mobile phone may obtain configuration data of the first wallpaper when the device state of the foldable-screen mobile phone is the folded state. The configuration data may include offset information of the first wallpaper (for example, the offset of the first wallpaper or the offset mode of the first wallpaper). Then, the foldable-screen mobile phone may display partial content of the first wallpaper based on the offset information of the first wallpaper, that is, display partial content of the first wallpaper in the drawing area by using the wallpaper window. When the device state of the foldable-screen mobile phone is the unfolded state, the foldable-screen mobile phone may directly display complete content of the first wallpaper.

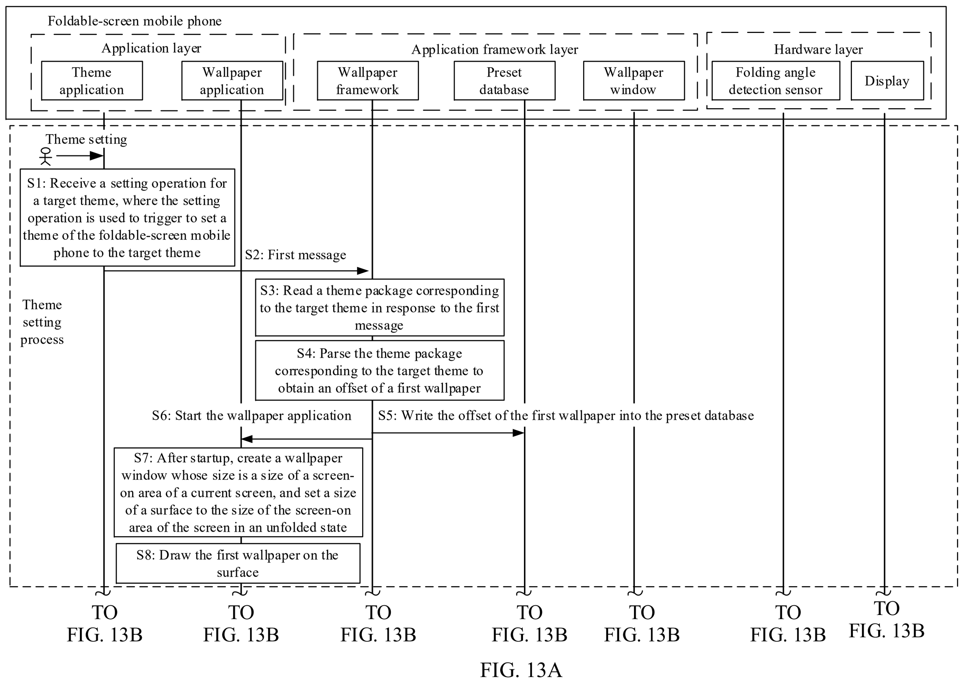

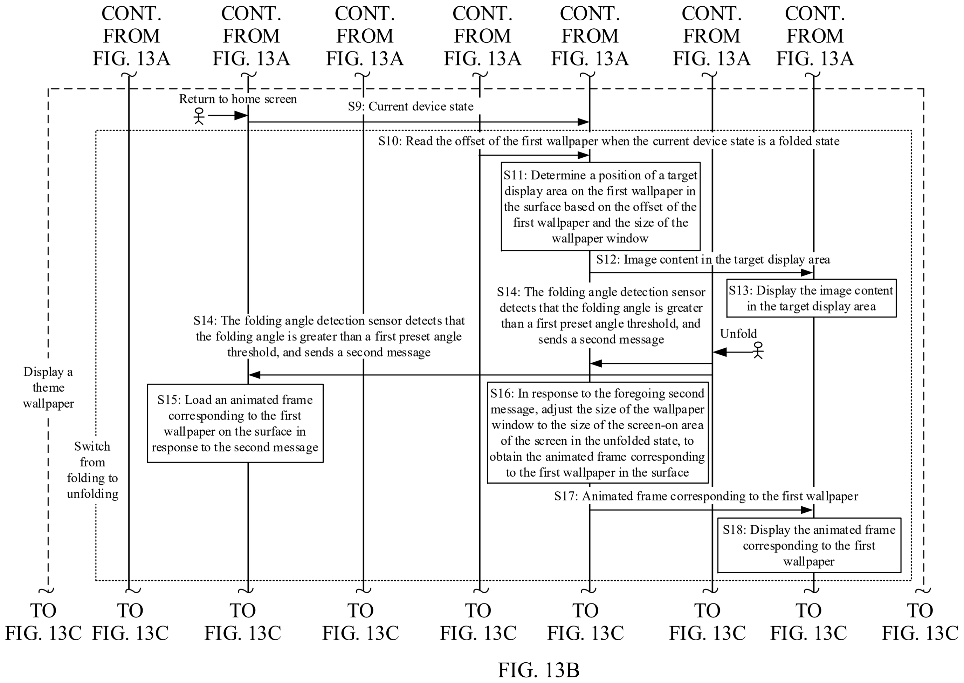

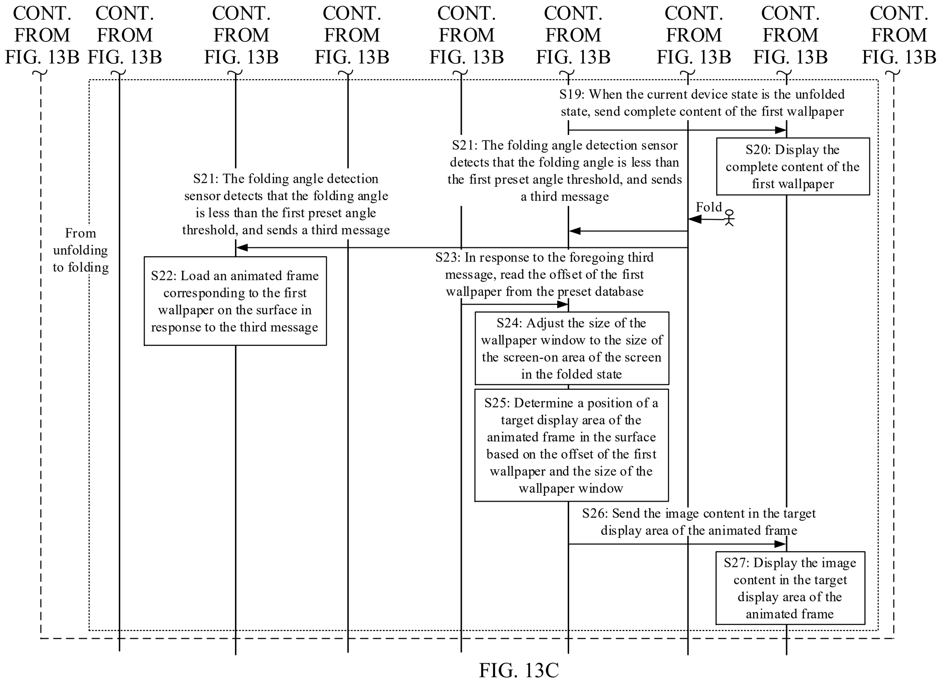

In some embodiments, a process of setting a live wallpaper and a process of applying a live wallpaper are described below with reference to the structure shown in FIG. 4 and by using an example in which the first wallpaper is a live wallpaper. The process of setting a live wallpaper may include S1-S8 shown in FIG. 13A TO FIG. 13C. The process of applying a live wallpaper may include S9-S27 shown in FIG. 13A TO FIG. 13C.

S1: A theme application receives a setting operation for a target theme. The setting operation is used to trigger to set a theme of the foldable-screen mobile phone to the target theme.

S2: The theme application sends a first message to a wallpaper framework in response to the setting operation. The first message is used to indicate that the theme of the foldable-screen mobile phone changes.

For example, the first message may include a specific identifier, and the specific identifier indicates that the theme applied by the foldable-screen mobile phone changes.

S3: The wallpaper framework reads a theme package corresponding to the target theme in response to the first message.

For example, the theme package corresponding to the target theme may include a configuration file of a first wallpaper corresponding to the target theme. The configuration file may include configuration data such as an offset (or may be considered as an offset of the theme), spring animation stiffness configuration information, dark mode configuration information, and blur configuration information of the first wallpaper.

S4: The wallpaper framework parses the theme package corresponding to the target theme to obtain the offset of the first wallpaper.

In this embodiment of this application, the wallpaper framework can directly learn the theme (that is, the target theme) that is set by the user. After receiving the first message, the wallpaper framework may directly read the theme package of the first wallpaper, and parse the theme package to obtain the configuration file of the first wallpaper, so as to obtain the offset of the first wallpaper from the configuration file.

In addition, in a process of parsing the theme package, the wallpaper framework also obtains a wallpaper service required for displaying the first wallpaper. The theme package includes a path corresponding to the wallpaper service. The wallpaper framework may start the wallpaper service corresponding to the first wallpaper based on the path. Herein, the wallpaper service corresponding to the first wallpaper is equivalent to a wallpaper window. In this case, the wallpaper service is only started, and data needs to be filled for the wallpaper service, so that the wallpaper service matches the screen-on area of the current screen, displays wallpaper content, and so on.

S5: The wallpaper framework writes the offset of the first wallpaper into the preset database.

For example, the wallpaper framework may first delete an offset of an existing wallpaper (that is, a theme) in the preset database. Then, the wallpaper framework may write the offset of the first wallpaper into the preset database, so that the preset database may store only the offset of the theme currently set by the foldable-screen mobile phone, thereby reducing resource occupation. In some embodiments, the wallpaper framework may invoke the foregoing write interface to write the offset of the first wallpaper into the preset database.

In addition, other configuration information except the offset in the configuration file of the first wallpaper may not be written into the preset database. When another module needs to process the first wallpaper by using the other configuration information, the wallpaper framework may directly read the other configuration information and transfer the other configuration information to the another module.

S6: The wallpaper framework starts a wallpaper application.

For example, the wallpaper framework may create an instance of the wallpaper application, or described as creating a wallpaper application process, so as to start the wallpaper application.

S7: After the wallpaper application is started, the wallpaper application creates a wallpaper window whose size is a size of a screen-on area of a current screen, and sets a size of a surface to the size of the screen-on area of the screen in an unfolded state.

In some embodiments, a process in which the wallpaper application fills data for the wallpaper service corresponding to the first wallpaper may be referred to as creating a wallpaper window. For example, the wallpaper application assigns a height and a width of the screen-on area of the current screen to corresponding variables in the wallpaper service, so as to obtain the wallpaper window whose size is the same as the size of the screen-on area of the current screen.

S8: The wallpaper application draws the first wallpaper on the surface.

The process of setting the first wallpaper corresponding to the target theme is described above. The process of displaying the first wallpaper is further described below.

S9: The wallpaper application sends a current device state to the wallpaper window in response to a return-to-home screen operation.

For example, the wallpaper application sends the current device state to the wallpaper service corresponding to the first wallpaper. The current device state may be represented by a state identifier. For example, the state identifier corresponding to the folded state is 0, and the state identifier corresponding to the unfolded state is 1.

In some embodiments, when creating the wallpaper window, the wallpaper application may alternatively fill the current device state directly into the wallpaper service, so that the wallpaper service can obtain the current device state, or the wallpaper service can directly determine the current device state based on the size of the screen-on area of the current screen.

S10: When the current device state is the folded state, the wallpaper window reads the offset of the first wallpaper from the preset database.

S11: The wallpaper window determines a position of a target display area on the first wallpaper in the surface based on the offset of the first wallpaper and the size of the wallpaper window.

S12: The wallpaper window sends image content in the target display area to the display based on the position of the target display area.

For example, the target display area on the first wallpaper represents the display area of the first wallpaper in the folded state. The image content in the target display area represents the target display content described in the foregoing embodiment, that is, the wallpaper content displayed by the foldable-screen mobile phone in the folded state.

S13: The display displays the image content in the target display area.

S14: A folding angle detection sensor detects that the folding angle is greater than a first preset angle threshold, and sends a second message to the wallpaper application and the wallpaper window.

For example, the second message may include a current folding angle or a device state of the foldable-screen mobile phone.

S15: The wallpaper application loads an animated frame corresponding to the first wallpaper on the surface in response to the second message.

In this embodiment of this application, during display of the target display content, when the folding angle is greater than the first preset angle threshold, it indicates that the device state of the foldable-screen mobile phone is switched from the folded state to the unfolded state, and the first wallpaper may be dynamically played. Therefore, after receiving the second message, the wallpaper application may load an animated frame sequence corresponding to the first wallpaper on the surface, thereby implementing a dynamic display effect.

S16: In response to the foregoing second message, the wallpaper window adjusts the size of the wallpaper window to the size of the screen-on area of the screen in the unfolded state, to obtain the animated frame corresponding to the first wallpaper in the surface.

S17: The wallpaper window sends the foregoing animated frame corresponding to the first wallpaper to the display.

S18: The display displays the animated frame corresponding to the first wallpaper.

For example, the wallpaper window sends, to the display, complete image content that corresponds to the animated frame corresponding to the first wallpaper, so that the display displays the image content.

In this embodiment of this application, when the folding angle is greater than the first preset angle threshold, it indicates that the device state of the foldable-screen mobile phone is switched from the folded state to the unfolded state, and the size of the wallpaper window needs to match the size of the screen-on area of the screen in the unfolded state. Therefore, the wallpaper window may adjust the size of the wallpaper window, and the adjusted size of the wallpaper window is the same as the size of the surface. Therefore, complete content on the surface may be displayed by using the screen, so as to implement smooth switching between a large screen and a small screen of the wallpaper for display during switching between the large screen and the small screen, thereby resolving a problem occurring when the mobile phone with an outward foldable screen transitions display of wallpapers of two sizes during switching between the large screen and the small screen. In addition, during switching between the large screen and the small screen of the wallpaper for display, the size of the surface does not need to be changed, and only the size of the wallpaper window is adjusted, thereby avoiding a sudden picture change.

The foregoing S9-S18 describe the process in which the foldable-screen mobile phone displays the first wallpaper in the folded state, and displays the first wallpaper after switching from the folded state to the unfolded state. The following further describes another display case, that is, the process in which the mobile phone displays the first wallpaper in the unfolded state, and displays the first wallpaper after switching from the unfolded state to the folded state. S19-S20 indicate the process in which the foldable-screen mobile phone displays the first wallpaper in the unfolded state. S21-S27 indicate the process in which the foldable-screen mobile phone displays the first wallpaper after switching from the unfolded state to the folded state.

S19: When the current device state is the unfolded state, the wallpaper window sends complete content of the first wallpaper to the display.

S20: The display displays the complete content of the first wallpaper.

S21: The folding angle detection sensor detects that the folding angle is less than the first preset angle threshold, and sends a third message to the wallpaper application and the wallpaper window.

For example, the third message may include a current folding angle or a device state of the foldable-screen mobile phone.

S22: The wallpaper application loads an animated frame corresponding to the first wallpaper on the surface in response to the third message.

S23: In response to the foregoing third message, the wallpaper window reads the offset of the first wallpaper from the preset database.

S24: The wallpaper window adjusts the size of the wallpaper window to the size of the screen-on area of the screen in the folded state.

S25: The wallpaper window determines a position of a target display area of the animated frame in the surface based on the offset of the first wallpaper and the size of the wallpaper window.

The target display area of the animated frame represents a display area of the animated frame in the folded state.

S26: The wallpaper window sends image content in the target display area to the display based on the position of the target display area of the animated frame.

S27: The display displays the image content in the target display area.

The image content in the target display area of the animated frame represents the wallpaper content displayed by the foldable-screen mobile phone that switches from the unfolded state to the folded state during display of the first wallpaper corresponding to the theme.

In some embodiments, to implement timely adaptive display of the wallpaper, when the folding angle is less than a second angle threshold during display of the complete first wallpaper, the second angle threshold is greater than the first preset angle threshold, which indicates that the foldable-screen mobile phone is in a pre-folded state, that is, is about to switch to the folded state. This indicates that the foldable-screen mobile phone is about to display a wallpaper that matches the size of the screen-on area of the screen in the folded state. The folding angle detection sensor may send a fourth message to the wallpaper window, and in response to the fourth message, the wallpaper window may read the offset of the first wallpaper from the preset database. Then, the user continues to fold the foldable-screen mobile phone. When the folding angle is less than the first preset threshold, the folding angle detection sensor sends a third message to the wallpaper application and the wallpaper window. In response to the third message, the wallpaper window may no longer repeatedly read the offset of the first wallpaper, so as to implement pre-reading of the offset of the first wallpaper.

It should be understood that, as described in FIG. 13A TO FIG. 13C, the process in which the foldable-screen mobile phone displays a live wallpaper (that is, an animation) when switching from the folded state to the unfolded state or switching from the unfolded state to the folded state is merely an example of wallpaper display. A wallpaper display manner is not limited in this application.

In some embodiments, this application provides a computer-readable storage medium, including computer instructions. When the computer instructions are run on an electronic device, the electronic device is enabled to perform the wallpaper display method described above.

In some embodiments, this application provides a computer program product. When the computer program product runs on an electronic device, the electronic device is enabled to perform the wallpaper display method described above.

It can be clearly learned by a person skilled in the art from the foregoing descriptions of the implementations that for convenience and brevity of description, only division into the foregoing functional modules is used as an example for description. In an actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A wallpaper display method, applied to a foldable-screen device, wherein the wallpaper display method comprises:
displaying, by the foldable-screen device in an unfolded state, a first interface, wherein the first interface displays a first wallpaper in full screen, the first wallpaper has a corresponding offset, the offset of the first wallpaper indicates an offset value of a display area of the first wallpaper in a folded state relative to a display area of the first wallpaper in an unfolded state, a size of the display area of the first wallpaper in the folded state is the same as a size of a screen-on area of a screen in the folded state, and a size of the display area of the first wallpaper in the unfolded state is the same as a size of the screen-on area of the screen in the unfolded state; and
switching, by the foldable-screen device, from the unfolded state to the folded state in response to a folding operation on the foldable-screen device, wherein the foldable-screen device in the folded state displays a second interface, the second interface displays a second wallpaper, the second wallpaper is partial content of the first wallpaper, and the second wallpaper displayed in the second interface has an offset corresponding to the offset in a target direction relative to the first wallpaper displayed in the first interface.

2. The method according to claim 1, wherein after the switching, by the foldable-screen device, from the unfolded state to the folded state, the method further comprises:
switching, by the foldable-screen device, from the folded state to the unfolded state in response to an unfolding operation on the foldable-screen device, wherein the foldable-screen device displays a third interface, and the third interface displays the first wallpaper in full screen.

3. The method according to claim 1 or 2, wherein before the displaying a first interface, the method further comprises:
creating, by the foldable-screen device in response to a second operation, a wallpaper window whose size is the size of the screen-on area of the screen in the folded state, wherein the second operation is used to trigger to set a theme of the foldable-screen device to a target theme, and the first wallpaper is a wallpaper corresponding to the target theme; and
setting, by the foldable-screen device, a size of a drawing area surface corresponding to the wallpaper window, wherein the size of the surface is the size of the screen-on area of the screen in the unfolded state, the surface is used to draw complete content of the first wallpaper, and
the second wallpaper is partial content of the first wallpaper in the surface.

4. The method according to claim 3, wherein the setting, by the foldable-screen device, a size of a drawing area surface corresponding to the wallpaper window comprises:
setting, by the foldable-screen device, the size of the surface by using a wallpaper application when the wallpaper application has a setting permission.

5. The method according to claim 4, wherein the wallpaper application has the setting permission when a preset whitelist comprises an identifier of the wallpaper application.

6. The method according to any one of claims 3 to 5, wherein the method further comprises:
writing, by the foldable-screen device, the offset of the first wallpaper in a theme package corresponding to the target theme into a preset database; and
before the foldable-screen device in the folded state displays the second interface, the method further comprises:
reading, by the foldable-screen device, the offset of the first wallpaper from the preset database.

7. The method according to claim 6, wherein the writing, by the foldable-screen device, the offset of the first wallpaper in a theme package corresponding to the target theme into a preset database comprises:
when no offset of a wallpaper exists in the preset database, writing, by the foldable-screen device, the offset of the first wallpaper into the preset database;
when an offset of a wallpaper exists in the preset database, deleting, by the foldable-screen device, the offset of the wallpaper that already exists in the preset database; and
writing, by the foldable-screen device, the offset of the first wallpaper into the preset database.

8. The method according to any one of claims 1 to 7, wherein when the foldable-screen device is in a horizontal fold mode, the offset is an offset in an x direction, and the target direction is the x direction; or when the foldable-screen device is in a vertical fold mode, the offset is an offset in a y direction, and the target direction is the y direction.

9. The method according to any one of claims 1 to 8, wherein the method further comprises:
determining, by the foldable-screen device, a position of the display area of the first wallpaper in the folded state based on the offset and the size of the screen-on area of the screen in the folded state.

10. The method according to any one of claims 1 to 7, wherein the first wallpaper has a corresponding offset mode; when the foldable-screen device is in a horizontal fold mode, the offset mode comprises one or more of a center mode, a left-align mode, and a right-align mode; or when the foldable-screen device is in a vertical fold mode, the offset mode comprises one or more of a center mode, a top-align mode, and a bottom-align mode.

11. An electronic device, wherein the electronic device comprises a display, a memory, and one or more processors; the display and the memory are coupled to the processor; the display is configured to display an image generated by the processor, and the display comprises a foldable screen; the memory is configured to store computer program code, and the computer program code comprises computer instructions; and when the processor executes the computer instructions, the electronic device is enabled to perform the method according to any one of claims 1 to 10.

12. A computer-readable storage medium, comprising computer instructions, wherein when the computer instructions are run on an electronic device, the electronic device is enabled to perform the method according to any one of claims 1 to 10.
